(19) Europäisches Patentamt / European Patent Office / Office européen des brevets

(11) **EP 1 302 444 B1**

(12) **EUROPÄISCHE PATENTSCHRIFT**

(45) Veröffentlichungstag und Bekanntmachung des Hinweises auf die Patenterteilung:
**10.06.2009 Patentblatt 2009/24**

(51) Int Cl.:
***C01B 33/18*** *(2006.01)*   ***C09C 1/30*** *(2006.01)*
***C09C 3/12*** *(2006.01)*

(21) Anmeldenummer: **02019800.8**

(22) Anmeldetag: **05.09.2002**

(54) **Kieselsäure mit geringem Gehalt an Kieselsäure-Silanolgruppen**

Silica with low content of silanol groups

Silice à faible teneur en fonctions silanols

(84) Benannte Vertragsstaaten:
**DE FR GB**

(30) Priorität: **13.09.2001 DE 10145162**

(43) Veröffentlichungstag der Anmeldung:
**16.04.2003 Patentblatt 2003/16**

(73) Patentinhaber: **Wacker Chemie AG**
**81737 München (DE)**

(72) Erfinder:
• **Barthel, Herbert, Dr.**
**84547 Emmerting (DE)**
• **Heinemann, Mario, Dr.**
**84489 Burghausen (DE)**
• **Grünwald, Franz**
**84533 Haiming (DE)**
• **Maginot, Helmut**
**84508 Burgkirchen (DE)**

• **Völkel, Ute**
**84489 Burghausen (DE)**

(74) Vertreter: **Gössmann, Christoph Tassilo et al**
**Wacker-Chemie GmbH,**
**Zentralbereich PML,**
**Hanns-Seidel-Platz 4**
**81737 München (DE)**

(56) Entgegenhaltungen:
**EP-A- 0 686 676        EP-A- 0 924 267**
**EP-A- 0 926 210        WO-A-99/36356**
**DE-A- 3 938 373        US-A- 3 953 487**
**US-A- 4 307 023        US-A- 5 973 057**

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft eine silylierte Kieselsäure und Verfahren zur Herstellung dieser Kieselsäure.

Silylierte Kieselsäuren mit einem Restsilanolgehalt größer 25 % des Silanolgruppengehaltes der Ausgangskieselsäure, was einer Dichte an SiOH pro $nm^2$ kleiner als 0,6 bezogen auf die Oberfläche nach BET-Verfahren (DIN 66131 und 66132) entspricht, haben folgende Nachteile:

Der Restsilanolgehalt über 25% führt über Wasserstoffbrückenbindungen zwischen den Silanolgruppen der Kieselsäureoberfläche zu starken Wechselwirkungen zwischen den Kieselsäure-Partikeln und damit zu einer starken Verdickungswirkung, die vor allem für das Erreichen hoher Füllgrade in Polymer- und Harzsysteme störend bei der Verarbeitung ist.

In Pulversystemen führt ein Restsilanolgehalt über 25% zu Partikelwechselwirkungen und damit Reagglomeration und Separation. Dies beeinträchtigt in negativer Hinsicht die Eigenschaften Lagerstabilität des Fließverhaltens und der Triboelektrizität von Pulversystemen, wie Pulverharzen und Tonern.

Bereits bekannte Verfahren zur Belegung von KIESELSÄURE mit Organosiliciumverbindungen beruhen nach dem Stand der Technik auf der Zugabe von Silyliermittel. Dies setzt voraus, dass die Silyliermittel ausreichende Reaktivität aufweisen. Dies ist im allgemeinen der Fall, wenn diese Silyliermittel am Siliciumatom reaktive Gruppen aufweisen, wie bekanntermaßen Halogenid-Reste (Cl, Br), Alkoxy-Reste (OR) oder Amino-Reste (-N-R) oder Silazanreste (-N-Si-). Unter technischen Bedingungen werden oft, aus Gründen der Reaktionsbeschleunigung, und damit Wirtschaftlichkeit, protische Lösemittel, wie Wasser, zugesetzt. Dies kann zu Nebenreaktionen führen, die in der Bildung stabiler Siloxanbindungen, wie Si-O-Si münden, die unter den Reaktionbedingungen der Standes der Technik, nicht oder wenig reaktiv sind und somit unter technischen Bedingungen der Silylierreaktion nicht mehr zur Verfügung stehen. Letztlich führt dies zu einem minderen Silylierungsgrad als angestrebt und zu einer minderen Reaktionsausbeute als erwartet.

Bereits bekannte Verfahren zur Herstellung von pyrogener Kieselsäure mit Organosiliciumverbindungen beruhen auf dem Einsatz eines Rohstoffes pyrogene Kieselsäure, z.B. nach EP 0 855 368 A1 und der darin zitierten Literatur, die in einem Reinigungsschritt von anhaftendem Chlorwasserstoff durch zusätzliche Zugabe von Wasser oder Wasserdampf gereinigt wird. Nach dem Stand der Technik führt die zusätzlich Behandlung mit Wasser zu einer verbesserten Reinigung der Kieselsäure, aber auch zugleich zu einer erhöhten Oberflächen-Dichte an Hydroxylgruppen, die an Oberflächesiliciumatome gebunden sind, sogenannten Silanolgruppen. Üblicherweise wird diese erhöhte Oberflächensilanolgruppendichte mit einer erhöhten Reaktivität der so behandelten pyrogenen Kieselsäure in Verbindung gebracht.

EP 0 926 210 A1 beschreibt Siliciumdioxid, das an seiner Oberfläche teil- oder vollständig silylierte Polykieselsäureketten trägt, wobei die Summe aus Silanolgruppen der Siliciumdioxid-Oberfläche (SiOH) und aufgepfropften Silyliermittelresten (SiRa) größer ist als die Zahl der Silanolgruppen auf der Oberfläche von unbehandeltem Siliciumdioxid, wobei a 1, 2 oder 3 sein kann und R gleich oder verschieden sein kann und ein substituierter oder nicht substituierter Kohlenwasserstoffrest ist.

Überraschenderweise wird nun gefunden, dass die erhöhte Silanolgruppendichte auf der hydrophilen Ausgangs-Kieselsäure für das Erreichen eines hohen Silyliergrades, d.h. eines hohen Bedeckungsgrades mit Silyliermittel und einer hohen Ausbeute der Umsetzung der Oberflächensilanolgruppen zu Silyliermittelresten von größer als 75% und damit ein Restsilanolgehalt von kleiner als 25% störend ist.

Es kann versucht werden eine unzureichende Umsetzung der Silanolgruppen und damit eine mangelnde Reaktionsausbeute mit einem hohen Überschuß von Silyliermittel, das zur Erreichung des angestrebten Silyliergrades erforderlich ist, zu überwinden. Die für hohe Hydrophobierungsgrade notwendigen hohen Zugaben an Hydrophobiermittel erzeugen jedoch eine hohe Fracht an siliciumorganischen Abfällen, die teuer entsorgt werden muss.

Bekannt ist aus EP 579049 der Zusatz von Alkoholen als Katalysator zur Verbesserung der Reaktionsausbeute. Dies hat jedoch den Nachteil, dass anschließend der Alkohol als organische Fracht entsorgt werden muss, und zusätzlich Emissionen in Luft und Wasser erfolgen.

Bekannt ist aus DE 02211377 und DE 2344388 die Kieselsäure unter mechanischer Belastung zu silylieren. Bei den dort beschriebenen Verfahren werden jedoch keine Restsilanolgehalte von kleiner als 25% erzielt.

Ein weiterer Nachteil von diesen Kieselsäuren tritt auf bei Einsatz als aktiver Füllstoff in Flüssigkeits-, Polymer- und Harzsystemen mittlerer und hoher Polarität. Dort werden Probleme der Mischbarkeit und Verträglichkeit erhalten. Dies ist dann nachteilig, wenn ein inniger Verbund der Kieselsäure mit der umgebenden Matrix gefordert ist, um gute mechanische Eigenschaften wie Härte, Festigkeit, Zähigkeit und Abrasionsfestigkeit, etc., des Compounds zu erzielen.

Einen weiteren Nachteil zeigen diese Kieselsäuren, wenn sie als Additiv, z.B. als Antiblockmittel, als Rieselhilfsmittel oder zur Steuerung oder Regulierung von triboelektrischen Eigenschaften mit Feststoffen, insbesondere feinteiligen Feststoffen, wie vernetzte Polymer- und Harzsysteme oder anorganische feinteilige Feststoffe, eingesetzt werden. Es resultieren Probleme in der Mischbarkeit und Verträglichkeit. Dies führt zu Entmischung der Kieselsäure, wenn sie als Rieselhilfsmittel und / oder als Ladungsregulativ in pulverförmigen Produkten, wie Pulverharzsystem, wie für Pulverlackbeschichtungen eingesetzt, oder in Tonern und Entwicklern eingesetzt werden. Diese Entmischung steht in Zusammenhang mit mangelnder Kieselsäure-Pulverpartikel-Wechselwirkung. Diese Entmischung hat eine Destabilisierung und mangelnde Standzeit des Systems, also z.B. bei Toner-Kieselsäure-Mischungen mangelnde Stabilität unter Belastung wiederholter Kopier- und Aktiviervorgänge, zur Folge.

Aufgabe der Erfindung ist es die Nachteile des Standes der Technik zu überwinden.

Diese Aufgabe wird durch die Erfindung gelöst.

Ein Gegenstand der Erfindung ist eine silylierte Kieselsäure nach Anspruch 1.

Dies sind Kieselsäuren mit einem Restgehalt an Silanolgruppen kleiner als 25%, bevorzugt kleiner 15%, und besonders bevorzugt kleiner 10% der Ausgangskieselsäure. Besonders bevorzugt sind solche silylierte Kieselsäure mit einem Restgehalt an Silanolgruppen kleiner als 8%, und im speziellen mit einem Restgehalt an Silanolgruppen kleiner 5% der Ausgangskieselsäure.

Der Reststoffgehalt an Silanolgruppen wird nach dem Verfahren der Säure-Base-Titration nach Sears bestimmt, in einem Lösemittel gemischt aus Methanol (50 Vol%) und gesättigter wässriger Natriumchloridlösung (50 Vol%) in deionisiertem Wasser (G.W. Sears, Anal. Chem., 28(12), (1956), 1981)

Ein weiterer Gegenstand ist ein Verfahren zur Herstellung einer silylierte Kieselsäure, bei dem der Herstellungsprozess in getrennten aufeinanderfolgenden Schritten erfolgt, die jeweils in einem eigenen Gefäß erfolgen: (A) zunächst Herstellung der hydrophilen Ausgangskieselsäure, sodann (B) die Silylierung der Kieselsäure mit (1) Beladung der hydrophilen Kieselsäure mit Silyliermittel, (2) Reaktion der hydrophilen Kieselsäure mit dem Silyliermittel und (3) Reinigung der hydrophilen Kieselsäure von Silyliermittel und Nebenreaktionsprodukten.

Ausgangs-Kieselsäure

Als Basis-(Ausgangs-)-Produkt der Silylierung wird eine hydrophile pyrogene Kieselsäure eingesetzt, die unter wasserfreien Bedingungen hergestellt wird. Unter wasserfrei ist hierbei zu verstehen, dass weder im hydrothermalen Herstellungs-Prozess noch in den weiteren Schritten des Prozesses, wie Abkühlung, Reinigung und Lagerung, bis zum fertigen und gereinigten, verpackten und versandfertigen Produkt zusätzliches Wasser in den Prozess zugeführt wird, weder in flüssiger noch in dampfförmiger Form. Es wird dabei jedenfalls nicht mehr als 10 Gew.% Wasser bezogen auf das gesamte Gewicht der Kieselsäure zugegeben, vorzugsweise wird nicht mehr als 5 Gew.%, bevorzugt nicht mehr als 2,5 Gew.%, besonders bevorzugt überhaupt kein Wasser zugegeben.

Es wird vorzugsweise eine Kieselsäure mit erhöhter Oberflächenaktivität, beschreibbar als erhöhte Oberflächenhomogenität, charakterisierbar als minimale Oberflächenrauhigkeit auf molekularer Ebene eingesetzt.

Die Kieselsäure hat vorzugsweise eine mittlere Primärteilchen-Partikelgröße kleiner als 100 nm, bevorzugt mit einer mittleren Primärteilchen-Partikelgröße von 5 bis 50 nm. Diese Primärteilchen existieren nicht isoliert in der Kieselsäure, sondern sind Bestandteile größerer Aggregate und Agglomerate.

Vorzugsweise weist die Kieselsäure eine spezifische Oberfläche von 25 bis 500 m$^2$/g (gemessen nach der BET Methode nach DIN 66131 und 66132) auf.

Die Kieselsäure weist Aggregate (Definition nach DIN 53206) im Bereich von Durchmessern 100 bis 1000 nm auf, wobei die Kieselsäure aus Aggregaten aufgebaute Agglomerate (Definition nach DIN 53206) aufweist, die in Abhängigkeit von der äußeren Scherbelastung (z.B. Meßbedingungen) Größen von 1 bis 500 $\mu$m aufweisen.

Vorzugsweise weist die Kieselsäure eine fraktale Dimension der Oberfläche von vorzugsweise kleiner oder gleich 2,3 auf, bevorzugt von kleiner oder gleich 2,1, besonders bevorzugt von 1,95 bis 2,05, wobei die fraktale Dimension der Oberfläche $D_s$ hierbei definiert ist als:

Partikel-Oberfläche A ist proportional zum Partikel-Radius R hoch Ds

Vorzugsweise weist die Kieselsäure eine fraktale Dimension der Masse $D_m$ von vorzugsweise kleiner als oder gleich 2,8, bevorzugt kleiner als oder gleich 2,7, besonders bevorzugt von 2,4 bis 2,6 auf. Die fraktale Dimension der Masse $D_m$ ist hierbei definiert als:

Partikel-Masse M ist proportional zum Partikel-Radius R hoch $D_m$

Vorzugsweise weist die Kieselsäure eine Dichte an Oberflächen-Silanolgruppen SiOH von kleiner als 2,5 SiOH/nm$^2$, vorzugsweise kleiner 2,1 SiOH/nm$^2$, bevorzugt von kleiner als 2 SiOH/nm$^2$, besonders bevorzugt von 1,7 bis 1,9 SiOH/nm$^2$, auf.

Es können bei hoher Temperatur (>1000 °C) hergestellte Kieselsäuren eingesetzt werden. Besonders bevorzugt sind pyrogen hergestellte Kieselsäuren. Es können auch hydrophile Kieselsäuren eingesetzt werden, die frisch hergestellt direkt aus dem Brenner kommen, zwischengelagert oder bereits handelsüblich verpackt sind. Es können auch hydrophobierte Kieselsäuren z.B. handelsübliche, eingesetzt werden.

Es können unverdichtete, mit Schüttdichten < 60 g/l, aber auch verdichtete, mit Schüttdichten > 60 g/l Kieselsäuren eingesetzt werden.

Es können Gemische aus verschiedenen Kieselsäuren eingesetzt werden, so z.B. Mischungen aus Kieselsäuren unterschiedlicher BET-Oberfläche, oder Mischungen aus Kieselsäuren mit unterschiedlichem Hydrophobier- oder Silyliergrad.

Ein erfindungsgemäßes Verfahren zur Herstellung einer erfindungsgemäßen Kieselsäure mit geringem Gehalt an Silanolgruppen ist ein Verfahren, wobei als Ausgangskieselsäure die oben beschriebene Kieselsäure verwendet wird, die

mit einem

I) Silyliermittel mit unpolaren Gruppen

I a) Organosilan der Formel

$$R^1_n SiX_{4-n}$$

wobei n = 1, 2 oder 3 ist
oder Mischungen aus diesen Organosilanen,
wobei $R^1$ ein einfach oder mehrfach ungesättigter, einwertiger, gegebenenfalls halogenierter, Kohlenwasserstoffrest mit 1 bis 18 C-Atomen ist und dabei gleich oder verschieden sein kann und X = Halogen, Stickstoffrest, $OR^2$, $OCOR^2$, $O(CH_2)_x OR^2$ bedeutet,
wobei $R^2$ Wasserstoff oder ein einwertiger Kohlenwasserstoffrest mit 1 bis 12 C-Atomen bedeutet
und x = 1, 2, 3 bedeutet
oder

I b) Organosiloxan aufgebaut aus Einheiten der Formel

$$(R^1_3 SiO_{1/2}),$$

und/oder

$$(R^1_2 SiO_{2/2}),$$

und/oder

$$(R^1 SiO_{3/2})$$

wobei $R^1$ die obige Bedeutung hat, wobei
die Anzahl von diesen Einheiten in einem Organosiloxan mindestens 2 ist, silyliert wird und Ia und Ib allein oder in beliebigen Gemischen eingesetzt werden können.

Die Organosiloxane sind bevorzugt bei Belegungstemperatur flüssig.

Bei Organosiloxanen mit einer Viskosität mit größer als 1000 mPas sind solche bevorzugt, die sich in einem technisch handhabbaren Lösungsmittel, wie vorzugsweise Alkohole wie Methanol, Ethanol, iso-Propanol, Ether wie Diethylether, Tetrahydrofuran, Siloxane wie Hexamethyldisiloxan, Alkane wie Cyclohexan oder n-Octan, Araliphaten wie Toluol oder Xylol, mit einer Konzentration >10% und einer Mischungsviskosität kleiner als 1000 mPas bei Belegungstemperatur lösen lassen.

Unter bei Belegungstemperatur festen Organosiloxanen sind solche bevorzugt, die sich in einem technisch handhabbaren Lösungsmittel (wie oben definiert) mit einer Konzentration größer als 10% und einer Mischungsviskosität kleiner als 1000 mPas bei Belegungstemperatur lösen lassen.

Beispiele für $R^1$ sind Alkylreste wie der Methylrest, der Ethylrest, Propylreste wie der iso- oder der n-Propylrest, Butylreste wie der t- oder n-Butylrest, Pentylreste wie der neo-Pentylrest, die iso-Pentylreste oder der n-Pentylrest, Hexylreste wie der n-Hexylrest, Heptylreste wie der n-Heptylrest, Octylreste wie der 2-Ethyl-hexyl- oder der n-Octylrest, Decylreste wie der n-Decylrest, Dodecylreste wie der n-Dodecylrest, Hexadecylreste wie der n-Hexadecylrest, Octadecylreste wie der n-Octadecylrest, Alkenylreste wie der Vinyl-, der 2-Allyl- oder der 5-Hexenylrest, Arylreste wie der Phenyl-, der Biphenylyl- oder Naphthenylrest, Alkylarylreste wie Benzyl-, Ethylphenyl-, Toluyl- oder die Xylylreste, halogenierte Alkylreste wie der 3-Chlorpropyl-, der 3,3,3-Trifluorpropyl oder der Perfluorhexylethylrest, halogenierte Arylreste wie der Chlorphenyl oder Chlorbenzylrest.

Bevorzugte Beispiele für $R^1$ sind der Methylrest, der Octylrest und der Vinylrest, besonders bevorzugt ist der Methylrest.

Beispiele für $R^2$ sind Alkylreste wie der Methylrest, der Ethylrest, Propylreste wie der iso- oder der n-Propylrest, Butylreste wie der t- oder n-Butylrest, Pentylreste wie der neo-Pentylrest, die iso-Pentylreste oder der n-Pentylrest, Hexylreste wie der n-Hexylrest, Heptylreste wie der n-Heptylrest, Octylreste wie der 2-Ethyl-hexyl- oder der n-Octylrest, Decylreste wie der n-Decylrest, Dodecylreste wie der n-Dodecylrest.
Bevorzugte Beispiele für $R^2$ sind der Methyl- und Ethylrest.

Beispiele für Organosilane sind Methyltrichlorsilan, Dimethyldichlorsilan, Trimethylchlorsilan, Methyltrimethoxysilan, Dimethyldimethoxysilan, Trimethylmethoxysilan, Methyltriethoxysilan, Dimethyldiethoxysilan, Trimethylethoxysilan, Methyltriacetoxysilan, Dimethyldiacetoxysilan, Trimethylacetoxysilan, Octylmethyldichlorsilan, Octyltrichlorsilan, Octadecylmethyldichlorsilan, Octadecyltrichlorsilan, Vinyltrichlorsilan, Vinlymethyldichlorsilan, Vinyldimethylchlorsilan, Vinyltrimethoxysilan, Vinylmethyldimethoxysilan, Vinyldimethylmethoxysilan, Vinyltriethoxysilan, Vinylmethyldiethoxysilan, Vinyldimethylethoxysilan, Hexamethyldisilazan, Divinyltetramethyldisilazan, Bis(3,3-trifluorpropyl)tetramethyldisilazan, Octamethylcyclotetrasilazan, Trimethylsilanol.

Es können auch beliebige Gemische aus Organosilanen eingesetzt werden.

Gemische aus Methyl-Chlorsilanen einerseits oder Alkoxysilanen und gegebenenfalls Disilazanen andererseits sind bevorzugt.

Bevorzugt ist Methyltrichlorsilan, Dimethyldichlorsilan und Trimethylchlorsilan oder Hexamethyldisilazan.

Beispiele für Organosiloxane sind lineare oder cyclische Dialkylsiloxane mit einer mittleren Anzahl an Dialkylsiloxyeinheiten von größer als 3. Die Dialkylsiloxane sind bevorzugt Dimethylsiloxane. Besonders bevorzugt sind lineare Polydimethylsiloxane mit folgenden Endgruppen: Trimethylsiloxy, Dimethylhydroxysiloxy, Dimethylchlorsiloxy, Methyldichlorsiloxy, Dimethylmethoxysiloxy, Methyldimethoxysiloxy, Dimethylethoxysiloxy, Methyldiethoxysiloxy, Dimethylacetoxysiloxy, Methyldiacetoxysiloxy, Dimethylhydroxysiloxy, wobei die Endgruppen gleich oder unterschiedlich sein können.
Besonders bevorzugt sind unter den genannten Polydimethylsiloxanen solche mit einer Viskosität bei 25°C von 2 bis 100 mPas und mit den Endgruppen Trimethylsiloxy oder Dimethylhydroxysiloxy.

Weitere Beispiele für Organosiloxane sind flüssige oder lösliche Siliconharze, im besonderen solche, die als Alkylgruppe Methylgruppen enthalten.

Besonders bevorzugt sind solche, die $R^1_3SiO_{1/2}$ und $SiO_{4/2}$ Einheiten enthalten oder solche, die $R^1SiO_{3/2}$ und gegebenenfalls $R^1_2SiO_{2/2}$ Einheiten enthalten. Hierbei ist $R^1$ bevorzugt Methyl.

Herstellung der erfindungsgemäßen homogen silylierten Kieselsäure mit geringem Gehalt an Silanolgruppen:

Die Herstellung (A) der hydrophilen Kieselsäure erfolgt bevorzugt nach bekannter Technik der Herstellung pyrogener Kieselsäure bei hoher Temperatur durch die Umsetzung eines Silans in einer Wasserstoff-Sauerstoffflamme bei Temperaturen von 1000 - 1500 °C. Als Silan wird bevorzugt eingesetzt Tetrachlorsilan, Methyltrichlorsilan, Hydrogentrichlorsilan, Hydrogenmethyldichlorsilan, Tetramethoxysilan, Tetraethoxysilan, Hexamethyldisiloxan, oder deren Gemische. Tetrachlorsilan ist besonders bevorzugt. Nach Umsetzung wird die Kieselsäure von Prozessgas getrennt, dies erfolgt bevorzugt über Filter, und anschließend von restlichem Chlorwasserstoffgas gereinigt, dies erfolgt bevorzugt in einem heißen Gasstrom, als Gase sind bevorzugt Luft oder Stickstoff bei Temperaturen von vorzugsweise größer 250°C - 500 °C, bevorzugt 250°C - 350°C und besonders bevorzugt 350 °C - 400 °C. Es wird dabei jedenfalls nicht mehr als 10 Gew.% Wasser bezogen auf das gesamte Gewicht der Kieselsäure zugegeben, vorzugsweise wird nicht mehr als 5 Gew.%, bevorzugt nicht mehr als 2,5 Gew.%, besonders bevorzugt überhaupt kein Wasser zugegeben.

Die Oberflächenbehandlung oder Silylierung (B) der Kieselsäure erfolgt in 3 Schritten, nämlich (1) Belegung, (2) Reaktion, (3) Reinigung.

Die Oberflächenbehandlung wird bevorzugt in einer Atmosphäre durchgeführt, die nicht zur Oxidation der silylierten Kieselsäure führt, d.h. bevorzugt weniger als 10 Vol% Sauerstoff, besonders bevorzugt weniger als 2,5 Vol%, beste Ergebnisse werden erzielt bei weniger als 1 Vol% Sauerstoff.

Belegung, Reaktion und Reinigung können als diskontinuierlicher oder kontinuierlicher Prozess durchgeführt werden.

Aus technischen Gründen bevorzugt ist eine kontinuierliche Reaktionsführung.

In einer weiteren besonders bevorzugten Ausführung ist zwischen den getrennten Einheiten der Beladung und der Reaktion kein weiterer Förderschritt zum Transport der Kieselsäure erforderlich; die Förderung erfolgt durch Gravitation, z.B. durch schwerkraftbedingten Fall. Die Trennung zwischen Beladung und Reaktion kann hierbei durch ein geeignetes mechanisches Trennsystem realisiert werden, wie eine Klappe, eine Doppelklappe oder geeignet ausgelegte Schleusensysteme, wie Zellradschleusen. In einer anderen Ausführung kann die Trennung durch eine Verjüngung des Behälterquerschnitts um größer als Faktor 2 oder durch eine Rohrleitung realisiert werden, wobei dieser Übergang durch Rührorgane von Verstopfungen freigehalten wird. Die Vorgehensweise hat den Vorteil, dass die Kieselsäure, im Zustand der zunächst physikalischen Beladung mit Silyliermittel, immer in engstem Kontakt mit diesem verbleibt, bis zu dem Zeitpunkt, an dem die vollständige Fixierung des Silyliermittels auf der Kieselsäure erfolgt ist.

In einer weiteren besonders bevorzugten Ausführung ist zwischen den getrennten Einheiten der Reaktion und der Reinigung kein weiterer Förderschritt zum Transport der Kieselsäure erforderlich; die Förderung erfolgt gravimetrisch, durch schwerkraftbedingten Fall. Die Trennung zwischen Reaktion und Reinigung kann hierbei durch ein geeignetes mechanisches Trennsystem realisiert werden, wie eine Klappe, eine Doppelklappe oder geeignet ausgelegte Schleusesysteme, wie Zellradschleusen.

Die Belegung erfolgt bei Temperaturen von -30 - 250 °C, bevorzugt 20-150 °C, besonders bevorzugt 20-50 °C; bevorzugt wird der Belegungsschritt auf 30-50 °C gekühlt. Die Verweilzeit beträgt 1 Min - 24 h, bevorzugt 15 Min bis 240 Min, aus Gründen der Raumzeitausbeute besonders bevorzugt 15 Min bis 90 Min.

Der Reaktionsdruck reicht von schwachem Unterdruck bis 0,2 bar bis zum Überdruck von 100 bar, wobei aus technischen Gründen Normaldruck, das heißt druckfreies Arbeiten gegenüber Außen /Atmosphären-Druck bevorzugt ist.

Die Silyliermittel werden bevorzugt als Flüssigkeit zugefügt.

Die Silyliermittel werden vorzugsweise in die pulverförmige Kieselsäure zugemischt.

Dies geschieht vorzugsweise durch Düsentechniken, oder vergleichbare Techniken, wie effektive Verdüsungstechniken, wie Verdüsen in 1-Stoffdüsen unter Druck (vorzugsweise 5 bis 20 bar), Versprühen in 2-Stoffdüsen unter Druck (vorzugsweise Gas und Flüssigkeit 2-20 bar), Feinstverteilen mit Atomizern oder Gas-Feststoff-Austauschaggregaten mit beweglichen, rotierenden oder statischen Einbauten, die eine homogene Verteilung der flüssigen Silyliermitel mit der pulverförmigen Kieselsäure erlauben.

Bevorzugt wird das Silyliermittel als feinstverteiltes Aerosol zugefügt, dadurch gekennzeichnet, dass das Aerosol eine Sinkgeschwindigkeit von 0,1 - 20 cm/s aufweist.

Bevorzugt erfolgt die Beladung der Kieselsäure und die Reaktion mit dem Silyliermittel unter mechanischer oder gasgetragener Fluidisierung. Besonders bevorzugt ist die mechanische Fluidisierung.

Eine Gas-getragene Fluidisierung kann durch alle inerten Gase erfolgen, die nicht mit dem Silyliermittel, der Kieselsäure, der silylierten Kieselsäure und Nebenreaktionprodukten reagieren, also nicht zu Nebenreaktionen, Abbaureaktionen, Oxidationsvorgängen und Flammen- und Explosionserscheinungen führen, wie vorzugsweise $N_2$, Ar, andere Edelgase, $CO_2$, etc. Die Zuführung der Gase zur Fluidisierung erfolgt bevorzugt im Bereich von Leerrohrgasgeschwindigkeiten von 0,05 bis 5 cm/s, besonders bevorzugt von 0,5-2,5 cm/s.

Besonders bevorzugt ist die mechanische Fluidisierung, die ohne zusätzlichen über die Inertisierung hinausgehenden Gaseinsatz, durch Flügelrührer, Ankerrührer, und sonstige geeignete Rührorgane erfolgt.

In einer besonders bevorzugten Ausführung werden die nichtabreagierten Silyliermittel, Nebenreaktionsprodukte, nicht chemisch fixierte und gegebenenfalls veränderte Silyliermittelüberschüsse, Abreinigungsprodukte und Abgase aus dem Reinigungsschritt wieder in den Schritt der Belegung und Beladung der Kieselsäure zurückgeführt; dies kann teilweise oder vollständig geschehen, bevorzugt zu 10 - 90 % des gesamten Volumenstromes der aus der Abreinigung austretenden Gasvolumina.

Dies geschieht in geeigneten temperierten Vorrichtungen.

Diese Rückführung erfolgt bevorzugt in nicht-kondensierter Phase, also als Gas oder als Dampf. Diese Rückführung kann als Stofftransport entlang eines Druckausgleichs erfolgen oder als gesteuerter Stofftransport mit den technisch üblichen Systemen des Gastransports, wie Ventilatoren, Pumpen, Druckluftmembranpumpen. Da die Rückführung der nichtkondensierten Phase bevorzugt ist, empfiehlt sich gegebenenfalls die Beheizung der rückführenden Leitungen.

Die Rückführung der Abreaktionsprodukte und Nebenreaktionsprodukte kann dabei zwischen 5 und 100 Gew.%, bezogen auf deren Gesamtmasse, bevorzugt zwischen 30 und 80 Gew.% liegen. Die Rückführung kann dabei, bezogen auf 100 Teile frisch eingesetztes Silyliermittel zwischen 1 und 200 Teile, bevorzugt 10 bis 30 Teile betragen.

Die Abreinigungs- und Nebenreaktionsprodukte können dabei sowohl neutral, sauer oder basisch sein.

In einer Ausführung können diese Abreinigungs- und Nebenreaktionsprodukte neutral sein und reaktive Siliciumorganische Verbindungen darstellen.

In einer anderen Ausführung können diese Abreinigungs- und Nebenreaktionsprodukte basischen Charakters sein, im Sinne einer Brönsted oder Lewis Base.

In noch einer anderen Ausführung können diese Abreinigungs- und Nebenreaktionsprodukte sauren Charakters sein, im Sinne einer Brönsted oder Lewis Säure.

Die Rückführung der Reaktionsnebenprodukte und Abreinigungprodukte der Silylierreaktion in die Belegung erfolgt bevorzugt kontinuierlich.

Die **Reaktion** erfolgt bevorzugt bei Temperaturen 40-400 °C, bevorzugt 80-160 °C und besonders bevorzugt bei 80-120 °C.

Die Reaktionszeit beträgt 5 Min bis 48 h, vorzugsweise 10 Min bis 4 h.

Wahlweise können protische Lösungsmittel hinzugefügt werden, wie flüssige oder verdampfbare Alkohole oder Wasser; typische Alkohole sind iso-Propanol, Ethanol und Methanol. Es können auch Gemische der oben genannten protischen Lösungsmittel zugefügt werden. Vorzugsweise werden 1 bis 50 Gew.% an protischen Lösungsmittel bezogen auf die Kieselsäure zugefügt, besonders bevorzugt 5 bis 25 Gew.%. Besonders bevorzugt ist Wasser.

Wahlweise können saure Katalysatoren, von saurem Charakter im Sinne einer Lewis Säure oder einer Brönsted Säure, wie Chlorwasserstoff oder basische Katalysatoren, von basischem Charakter, im Sinne einer Lewis Base oder einer Brönsted Base, wie Ammoniak, zugesetzt werden. Bevorzugt werden diese in Spuren zugesetzt, d.h kleiner als 1000 ppm. Besonders bevorzugt werden keine Katalysatoren zugesetzt.

**Die Reinigung** von Reaktionsnebenprodukten erfolgt bei einer Reinigungstemperatur von 20°C bis 350°C, bevorzugt 50°C bis 200°C, besonders bevorzugt von 50 °C bis 150 °C.
Der Reinigungsschritt ist vorzugsweise durch Bewegung gekennzeichnet, wobei langsame Bewegung und geringes Durchmischen besonders bevorzugt ist. Die Rührorgane werden dabei vorteilhafterweise so eingestellt und bewegt, dass bevorzugt ein Mischen und ein Fluidisieren, jedoch nicht völlige Verwirbelung, eintritt.

Der Reinigungsschritt kann weiterhin durch erhöhten Gaseintrag gekennzeichnet sein, entsprechend einer Leerrohrgasgeschwindigkeit von 0,001 bis 10 cm/s, bevorzugt 0,01 bis 1 cm/s. Dies kann durch alle inerten Gase erfolgen, die nicht mit dem Silyliermittel, der Kieselsäure, der silylierten Kieselsäure und Nebenreaktionprodukten reagieren, also nicht zu Nebenreaktionen, Abbaureaktionen, Oxidationsvorgängen und Flammen- und Explosionserscheinungen führen, wie vorzugsweise $N_2$, Ar, andere Edelgase, $CO_2$, etc.

Zusätzlich können während der Silylierung oder im Anschluss an die Reinigung Verfahren zur mechanischen Verdichtung der Kieselsäure eingesetzt werden, wie zum Beispiel Presswalzen, Mahlaggregate, wie Kollergänge und wie Kugelmühlen, kontinuierlich oder diskontinuierlich, Verdichtung durch Schnecken oder Schraubenmischer, Schraubenverdichter, Brikettierer, oder Verdichten durch Absaugen des Luft- oder Gasinhaltes durch geeignete Vakuummethoden.

Besonders bevorzugt ist die mechanische Verdichtung während der Silylierung, im Schritt (II) der Reaktion durch Presswalzen, oben genannte Mahlaggregate wie Kugelmühlen oder Verdichtung durch Schnecken, Schraubenmischer, Schraubenverdichter, Brikettierer.

In einer weiteren besonders bevorzugten Verfahrensweise werden im Anschluss an die Reinigung Verfahren zur mechanischen Verdichtung der Kieselsäure eingesetzt werden, wie Verdichten durch Absaugen des Luft- oder Gasinhaltes durch geeignete Vakuummethoden.

Zusätzlich können in einer besonders bevorzugten Verfahrensweise im Anschluss an die Reinigung Verfahren zur Desagglomerierung der Kieselsäure eingesetzt werden, wie Stiftmühlen oder Vorrichtungen zur Mahlsichtung, wie Stiftmühlen, Hammermühlen, Gegenstrommühlen, Prallmühlen oder Vorrichtungen zur Mahlsichtung.

Das Silyliermittel wird vorzugsweise in einer Menge größer 3 Gew.%, bevorzugt größer 10 Gew.% Silyliermittel, pro einer eingesetzten KIESELSÄURE-Oberfläche von 100 $m^2$/g BET-Oberfläche eingesetzt (gemessen nach der BET Methode nach DIN 66131 und 66132).

Bei dem Verfahren zur Silylierung wird in einer besonders bevorzugten Ausführungsweise ein Silyliermittel mit einem Siedepunkt >300 °C bei Normaldruck und ein Silyliermittel mit einem Siedepunkt unter 200°C bei Normaldruck eingesetzt.

In einer weiteren bevorzugten Ausführung werden mindestens zwei verschiedene Silyliermittel eingesetzt, mit der Maßgabe, dass mindestens ein Silyliermittel eine Viskosität von kleiner als 2 mPas bei 25°C und mindestens ein Silyliermittel eine Viskosität von größer als 5 mPas bei 25 °C aufweist.

In einer besonders bevorzugten Ausführung sind Silyliermittel im Schritt (I) der Belegung Flüssigkeiten, d.h. die Belegungstemperatur (I) liegt unter dem tiefsten ihrer Siedepunkte.

In einer weiteren besonders bevorzugten Ausführung sind Silyliermittel in allen drei Schritten der Silylierung, nämlich der Belegung (I), der Reaktion (II) und der Reinigung (III), Flüssigkeiten.

Die Silylierung kann als diskontinuierliche Reaktion, d.h. im Batch-Verfahren oder als kontinuierliche Reaktion durchgeführt werden. Aus technischen Gründen bevorzugt ist eine kontinuierliche Reaktion.

Überraschenderweise wurde nun gefunden, dass die Rückführung der Reaktionsnebenprodukte und Abreinigungprodukte der Silylierreaktion zurück in den Schritt der Belegung zu einer Überwindung des o.g. Probleme und Phänomene führt.

Überraschenderweise wurde zugleich gefunden, dass wenn zwischen den getrennten Einheiten der Beladung und der Reaktion kein weiterer Förderschritt zum Transport der Kieselsäure erfolgt und die Förderung durch Gravitation, z.B. durch schwerkraftbedingten Fall, erfolgt, eine verbesserte Silylierung erfolgt. Die Trennung zwischen Beladung und Reaktion kann hierbei durch ein geeignetes mechanisches Trennsystem realisiert werden, wie eine Klappe, eine Doppelklappe oder geeignet ausgelegte Schleusesysteme, wie Zellradschleusen. Diese Vorgehensweise hat den Vorteil, dass die Kieselsäure, im Zustand der zunächst physikalischen Beladung mit Silyliermittel, immer in engstem Kontakt mit diesem verbleibt, bis zu dem Zeitpunkt an dem die vollständige Fixierung des Silyliermittels auf der Kieselsäure erfolgt ist.

Es werden höhere Reaktionsausbeuten und erhöhte Silyliergrade erhalten.

Ein Gegenstand (1) der Erfindung ist eine Kieselsäure mit geringem Gehalt an Silanolgruppen mit homogener Silyliermittelschicht, mit einer mittleren Primärteilchen-Partikelgröße kleiner als 100 nm, bevorzugt mit einer mittleren Primärteilchen-Partikelgröße von 5 bis 50 nm, wobei diese Primärteilchen nicht isoliert in der Kieselsäure existieren, sondern Bestandteile größerer Aggregate (Definition nach DIN 53206) sind, die einen Durchmesser von 100 bis 1000 nm aufweisen und Agglomerate (Definition nach DIN 53206) aufbauen, die in Abhängigkeit von der äußeren Scherbelastung Größen von 1 bis 500 $\mu$m aufweisen, wobei die Kieselsäure eine spezifische Oberfläche von 10 bis 300 m$^2$/g (gemessen nach der BET Methode nach DIN 66131 und 66132) aufweist, wobei die Kieselsäure eine fraktale Dimension der Masse $D_m$ von kleiner als oder gleich 2,8, bevorzugt kleiner als oder gleich 2,7, besonders bevorzugt von 2,4 bis 2,6, und eine Dichte an Oberflächen-Silanolgruppen SiOH von kleiner als 0,6 SiOH/nm$^2$, bevorzugt von kleiner als 0,25 SiOH/nm$^2$, besonders bevorzugt von kleiner als 0,15 SiOH/nm$^2$ und pro 100 m$^2$/g spezifischer Oberfläche (gemessen nach der BET Methode nach DIN 66131 und 66132) einen Kohlenstoffgehalt von mindestens 1,0 Gew.-%, bevorzugt größer 1,5 Gew.-% aufweist.

Die erfindungsgemäße Kieselsäure mit einem geringen Gehalt an Silanolgruppen und mit homogener Silyliermittelschicht, weist eine mittlere Primärteilchen-Partikelgröße kleiner als 100 nm, bevorzugt eine mittlere Primärteilchen-Partikelgröße von 5 bis 50 nm auf, wobei diese Primärteilchen nicht isoliert in der Kieselsäure existieren, sondern Bestandteile größerer Aggregate (Definition nach DIN 53206) sind.

Die Kieselsäure mit homogener Silyliermittelschicht weist insbesondere eine spezifische Oberfläche größer als 25 m$^2$/g (gemessen nach der BET Methode nach DIN 66131 und 66132) auf.

Die erfindungsgemäße KIESELSÄURE besteht aus Aggregaten (Definition nach DIN 53206) im Bereich von Durchmessern 100 bis 1000 nm, bevorzugt 100 bis 500 nm, besonders bevorzugt 100 bis 250 nm.

Die erfindungsgemäße KIESELSÄURE besteht aus Agglomeraten (Definition nach DIN 53206), die unter Scher-freien oder Scher-armen Meßbedingungen Agglomerate in der Größe von 1 mm bis 500 $\mu$m, bevorzugt 1 $\mu$m bis 50 $\mu$m aufweist.

Die erfindungsgemäße KIESELSÄURE weist pro 100 m$^2$/g spezifischer Oberfläche (gemessen nach der BET Methode nach DIN 66131 und 66132) einen Kohlenstoffgehalt von mindestens 1,0 Gew.-%, bevorzugt größer 1,5 Gew.-%, auf.

Die erfindungsgemäße KIESELSÄURE weist eine fraktale Dimension der Masse $D_m$ von kleiner als oder gleich 2,8, bevorzugt kleiner als oder gleich 2,7, besonders bevorzugt von 2,4 bis 2,6, auf

Die erfindungsgemäße KIESELSÄURE weist eine Dichte an Oberflächen-Silanolgruppen SiOH von kleiner als 0,6 SiOH/nm$^2$, bevorzugt von kleiner als 0,25 SiOH/nm$^2$, besonders bevorzugt von kleiner als 0,15 SiOH/nm$^2$, auf.

Die KIESELSÄURE weist bei Kontakt mit Wasser keine benetzbaren Anteile auf.

Die KIESELSÄURE zeigt Unpolarität, gemessen durch Adsorption von Methylrot (siehe Beschreibung der Analysenmethoden 1.7 zu Tabelle 1-1 Beispiele mit geringem Gehalt an Silanolgruppen in der Kieselsäure). Die erfindungsgemäße KIESELSÄURE kann aufgrund dieser Charakteristika als unpolar bezeichnet werden.

Die KIESELSÄURE zeigt ein Unpolarität, gemessen über Solvatochromie (mit Bis-Phenylen-di-Cyano-Eisen (II) in Dichlorethan) als Dipolarität $\pi^*$, von $\pi^*$ kleiner 1,0. Die erfindungsgemäße KIESELSÄURE kann nach diesen Charakteristika als unpolar bezeichnet werden.

Besondere Kennzeichen der erfindungsgemäßen Kieselsäure sind, dass ihre Oberfläche physikal-chemisch homogen ist, und dass die Silyliermittelreste und die restlichen, nicht reagierten Silanolgruppen, auch mikroskopisch, homogen gleichmäßig verteilt sind. Dies kann mittels Adsorptionsmessungen, wie statisch-volumetrische Gasadsorption oder inverse Gaschromatographie, gezeigt werden.

In einer bevorzugten Ausführung besitzt die erfindungsgemäße Kieselsäure eine vollständig chemisch gebundene Silyliermittelschicht (d.h. mit Tetrahydrofuran sind bei T = 25 °C weniger als 5 Gew.% der siliciumorganischen Silyliermittelschicht extrahierbar, wobei der Nachweis der extrahierten siliciumorganischen Verbindungen vorteilhafterweise mittels Silicium-spezifischer Atom-Absorptions-Spektrometrie erfolgt).

Ein weiterer Gegenstand sind vernetzbare Polymer- und / oder Harzmassen, die eine erfindungsgemäße Kieselsäure enthalten.

Die erfindungsgemäße KIESELSÄURE ist im weiteren dadurch gekennzeichnet, dass sie in polaren Systemen, wie lösemittelfreien vernetzbaren Polymeren und/oder Harzen, oder wie Lösungen, Suspensionen, Emulsionen und Dispersionen von organischen Harzen in wässrigen Systemen oder organischen Lösemitteln (z.B.: Polyester, Vinylester, Epoxid, Polyurethan, Alkydharze, u.a.). eine hohe Verdickungswirkung aufweist, und damit als rheologisches Additiv in diesen Systemen geeignet ist.

Die erfindungsgemäße KIESELSÄURE ist im weiteren dadurch gekennzeichnet, dass sie in unpolaren Systemen, wie unvernetztem Siliconkautschuk, eine geringe Verdickungswirkung aufweist, dabei zugleich aber eine hohe Verstärkungswirkung in den vernetzten Siliconkautschuken zeigt, und damit als Verstärkerfüllstoff für Siliconkautschuke hervorragend geeignet ist.

Die erfindungsgemäße KIESELSÄURE ist im weiteren dadurch gekennzeichnet, dass sie in pulverförmigen Systemen Verbackungen oder Verklumpungen, z.B. unter Feuchteeinfluß verhindert, aber auch nicht zur Reagglomeration neigt, und damit zur unerwünschten Separierung, sondern Pulver fließfähig erhält und somit belastungsstabile und lagerstabile Mischungen KIESELSÄURE-Pulver ermöglicht. Dies gilt im besonderen für den Einsatz in nichtmagnetischen und magnetischen Tonern und Entwicklern, die 1- und 2-Komponenten Systeme in Tonern, Entwickler, Ladungssteuerungshilfsmittel, z.B. in kontaktlosen oder elektrofotografischen Druck-/Reproduktionsverfahren, sein können. Dies gilt auch in pulverförmigen Harzen, die als Anstrichsysteme verwendet werden.

Ein weiterer Gegenstand der Erfindung ist ein Toner, Entwickler, Ladungssteuerungshilfsmittel, z.B. in kontaktlosen oder elektrofotografischen Druck-/Reproduktionsverfahren, der eine homogen silylierte Kieselsäure mit geringem Gehalt an Silanolgruppen enthält.

Die Erfindung betrifft allgemein den Einsatz der erfindungsgemäßen KIESELSÄURE in allen lösemittelfreien, lösemittelhaltigen, wasserverdünnbaren, filmbildenden Anstrichmitteln, gummiartigen bis harten Beschichtungen, Klebstoffen, Versiegelungs- und Vergußmassen sowie anderen vergleichbaren Systemen. Sie betrifft alle Systeme von niedriger bis hoher Polarität, die als viskositätsgebende Komponente KIESELSÄURE enthalten.

Sie betrifft insbesondere Systeme wie:

- Epoxidsysteme
- Polyurethansysteme (PUR)
- Vinylesterharze
- Ungesättigte Polyesterharze
- Wasserlösliche und wasserdispergierbare Harzsysteme
- Lösemittelarme Harzsysteme, sogenannte "high solids".
- Lösemittelfreie Harze, die in Pulverform z.B. als Beschichtungsstoffe appliziert werden.

Die erfindungsgemäße KIESELSÄURE liefert als rheologisches Additiv in diesen Systemen die erforderliche notwendige Viskosität, Strukturviskosität, Thixotropie und eine für das Standvermögen an senkrechten Flächen ausreichende Fließgrenze.

Die Erfindung betrifft den Einsatz der erfindungsgemäßen KIESELSÄURE als rheologisches Additiv und Verstärkerfüllstoff in unvernetzten und vernetzten Siliconsystemen, wie Siliconelastomere, die aus Siliconpolymeren, wie Polydimethylsiloxanen, Füllstoffen, und weiteren Additiven zusammengesetzt sind. Diese können z.B. mit Peroxiden vernetzt werden, oder über Additions-Reaktionen, die sogenannte Hydrosilylierungsreaktion, zwischen olefinischen Gruppen und Si-H Gruppen vernetzt werden, oder über Kondensationsreaktionen zwischen Silanolgruppen, z.B. solchen, die unter Wassereinwirkung entstehen.

Die Erfindung betrifft im weiteren den Einsatz der erfindungsgemäßen homogen silylierten Kieselsäure in Entwicklern und Toner, z.B. nichtmagnetische und magnetische, die 1-Komponenten und 2-Komponenten Systeme sein können. Diese Toner können aus Harzen, wie Styrol- und Acrylharzen, und deren Mischungen, oder Polyester- und Epoxyharzen, und deren Mischungen, bestehen, und bevorzugt zu Partikelverteilungen von 1-100 $\mu$m vermahlen sein können, oder können Harze sein, die in Polymerisationsverfahren in Dispersion oder Emulsion oder Lösung oder in Masse zu Partikelverteilungen von bevorzugt 1 - 100 $\mu$m hergestellt wurden. Die KIESELSÄURE wird bevorzugt eingesetzt zur Verbesserung und Steuerung des Pulver-Fließverhaltens, und / oder zur Regulierung und Steuerung der triboelektrischen Ladungseigenschaften des Toners oder Entwicklers. Derartige Toner und Entwickler können bevorzugt bei elektrophotografischen Print- und Druckverfahren eingesetzt werden, sie sind auch bei direkten Bildübertragungsverfahren einsetzbar. Dies gilt auch in pulverförmigen Harzen, die als Anstrichsysteme verwendet werden.

Ein Toner hat typischerweise folgende Zusammensetzung

- Fest-Harz als Binder, das ausreichend hart ist, um ein Pulver hieraus herzustellen, bevorzugt mit einem Molekulargewicht über 10000, bevorzugt mit einem Anteil an Polymeren von einem Molekulargewicht unter 10000 von weniger als 10%, z.B. ein Polyesterharz, das ein Co-Kondensat aus Diol und Carbonsäure,

- ester, oder -anhydrid sein kann, z.B. mit einer Säurezahl von 1-1000, bevorzugt 5-200, oder ein Polyacrylat oder ein Polystyrol, oder Mischungen, oder Co-Polymerisate hieraus sein kann, und mit einem mittleren Partikeldurchmesser kleiner 20 $\mu$m, bevorzugt kleiner 15 $\mu$m, besonders bevorzugt kleiner 10 $\mu$m. Das Tonerharz kann Alkohole, Carbonsäuren und Polycarbonsäure enthalten.

- Technisch übliche Farbstoffe, wie schwarzer Ruß, Farb-Ruß, Cyan-Farbstoffe, Magenta-Farbstoffe, Gelbe Farbstoffe.

- Typischerweise negative Ladungssteuerungsmittel:

  Ladungssteuernde Additive wie Metall-haltige Azo-Farbstoffe, oder Kupfer-Phthalocyanin Farbstoffe, oder Metall-Komplexe zum Beispiel von alkylierten Salicylsäure-Derivaten oder Benzoesäure, insbesondere mit Bor oder Aluminium, in den erforderlichen Mengen, typischerweise kleiner 5 Gew.%.

- Wahlweise positive Ladungssteuerungsmittel: Ladungssteuernde Additive z.B. vom Typ Nigrosin-Farbstoff, oder Triphenylmethan Farbstoffe substituiert mit tertiären Aminen, oder quaternäre Ammoniumsalze wie CTAB (cetyltrimethylammonium bromide = hexadecyltrimethylammonium bromide), oder Polyamine, typischerweise kleiner 5 Gew.%.

- Gegebenenfalls können, zur Herstellung magnetischer Toner, magnetische Pulver zugesetzt werden, wie z.B. Pulver, die in einem magnetischen Feld magnetisiert werden können, wie ferromagnetische Substanzen, wie Eisen, Kobalt, Nickel, Legierungen, oder Verbindungen wie Magnetit, Hematit oder Ferrit.

- Wahlweise können auch Entwickler zugesetzt werden, wie Eisenpulver, Glaspulver, Nickelpulver, Ferritpulver.

- Erfindungsgemäße Kieselsäure in Gehalten, bezogen auf ein Fest-Harz als Binder mit 20 $\mu$m mittlerem Partikeldurchmesser, von größer 0,01 Gew.%, bevorzugt größer 0,1 Gew.%. Mit abnehmendem mittlerem Partikeldurchmesser des Binders werden i.a. höhere Gehalte an Kieselsäure erforderlich, wobei die notwendige Menge an Kieselsäure umgekehrt proportional zum Partikeldurchmesser des Binders zunimmt. Der Gehalt an Kieselsäure ist vorzugsweise jedoch in jedem Fall kleiner 5 Gew.% bezogen auf Binder Harz.

- Weitere anorganische Zusätze, wie feinteilige und grobteilige Siliciumdioxide, darunter auch solche mit 100 bis 1000 nm mittlere Durchmesser, Aluminiumoxide, wie pyrogene Aluminiumoxide, Titandioxide, wie pyrogene oder Anatas oder Rutile, Zirconoxide.

- Wachse, wie paraffinische Waxe mit 10-500 C-Atomen, Siliconwachse, olefinische Wachse, Wachse mit einer Jodzahl < 50, bevorzugt < 25, und einer Verseifungszahl von 10-1000, bevorzugt 25-300

Der Toner kann in verschiedenen Entwicklungsverfahren eingesetzt werden, wie zur elektrophotografischen Bilderzeugung und Reproduktion, wie z.B. magnetische Bürsten-Verfahren, Kaskaden Verfahren, Einsatz von leitfähigen und nicht leitfähigen magnetischen Systemen, Pulverwolkenverfahren, Entwicklung in Abdruck, und andere.

**Vorteile:**

- hohe Reaktionsausbeuten - damit wirtschaftlich und Ressourcen schonend
- Hoher Silyliergrad bei minimalem Einsatz von Silyliermittel
- Hoher und homogener, gleichmäßiger Silyliergrad, auch bei Einsatz von in Chemie und Physik sehr unterschiedlichen Silyliermitteln
- Verwendbarkeit von Organosiliciumverbidnungen zur Silylierung, die nach dem Stand der Technik als reaktionsträge (siehe Einstufung der Reaktivität der Gruppen: Si-N > Si-Hal > Si-OH > SiOR >> Si-O-R, z.B. nach V.Tertykh) zu bewerten sind, und ansonsten nicht für eine wirtschaftliche Silylierung herangezogen werden können
- Silylierung unter Verzicht auf Katalysatoren, die oft aus verfahrenstechnischen Gründen im Produkt verbleiben müssen, die die Produktqualität und -performance des Endprodukts negativ beeinflussen könnten.
- Verbesserte Bildqualität bei Einsatz des mit der Kieselsäure hergestellten Toners
- Verlängerte Lebensdauer bei hoher Performance (z.B. Bildpunktdichte) des mit der Kieselsäure hergestellten Toners.

Ein weiterer Gegenstand der Erfindung ist eine Kieselsäure mit geringem Gehalt an Silanolgruppen, die homogen verteilte polare Oberflächengruppen aufweist.

Als Basis-(Ausgangs-)-Produkt der Silylierung wird eine hydrophile pyrogene Kieselsäure eingesetzt, die unter wasserfreien Bedingungen hergestellt wird. Unter wasserfrei ist hierbei zu verstehen, dass weder im hydrothermalen Herstellungs-Prozess noch in den weiteren Schritten des Prozesses, wie Abkühlung, Reinigung und Lagerung, bis zum fertigen und gereinigten, verpackten und versandfertigen Produkt zusätzliches Wasser in den Prozess zugeführt wird, weder in flüssiger noch in dampfförmiger Form. Es wird dabei jedenfalls nicht mehr als 10 Gew.% Wasser bezogen auf das gesamte Gewicht der Kieselsäure zugegeben, vorzugsweise wird nicht mehr als 5 Gew.%, bevorzugt nicht mehr als 2,5 Gew.%, besonders bevorzugt überhaupt kein Wasser zugegeben.

Es wird vorzugsweise eine Kieselsäure mit erhöhter Oberflächenaktivität, beschreibbar als erhöhte Oberflächenhomogenität, charakterisierbar als minimale Oberflächenrauhigkeit auf molekularer Ebene eingesetzt.

Die Kieselsäure hat vorzugsweise eine mittlere Primärteilchen-Partikelgröße kleiner als 100 nm, bevorzugt mit einer mittleren Primärteilchen-Partikelgröße von 5 bis 50 nm. Diese Primärteilchen existieren nicht isoliert in der Kieselsäure, sondern sind Bestandteile größerer Aggregate und Agglomerate.

Vorzugsweise weist die Kieselsäure eine spezifische Oberfläche von 25 bis 500 $m^2$/g (gemessen nach der BET Methode nach DIN 66131 und 66132) auf.

Die Kieselsäure weist Aggregate (Definition nach DIN 53206) im Bereich von Durchmessern 100 bis 1000 nm auf, wobei die Kieselsäure aus Aggregaten aufgebaute Agglomerate (Definition nach DIN 53206) aufweist, die in Abhängigkeit von der äußeren Scherbelastung Größen von 1 bis 500 μm aufweisen.

Vorzugsweise weist die Kieselsäure eine fraktale Dimension der Oberfläche von vorzugsweise kleiner oder gleich 2,3 auf, besonders bevorzugt von kleiner oder gleich 2,1, im besonderen bevorzugt von 1,95 bis 2,05, wobei die fraktale Dimension der Oberfläche $D_s$ hierbei definiert ist als:

Partikel-Oberfläche A ist proportional zum Partikel-Radius R hoch Ds

Vorzugsweise weist die Kieselsäure eine fraktale Dimension der Masse $D_m$ von vorzugsweise kleiner als oder gleich 2,8, bevorzugt kleiner als oder gleich 2,7, besonders bevorzugt von 2,4 bis 2,6 auf. Die fraktale Dimension der Masse $D_m$ ist hierbei definiert als:

Partikel-Masse M ist proportional zum Partikel-Radius R hoch $D_m$.

Vorzugsweise weist die Kieselsäure eine Dichte an Oberflächen-Silanolgruppen SiOH von kleiner als 2,5 SiOH/$nm^2$, vorzugsweise kleiner 2,1 SiOH/$nm^2$, bevorzugt von kleiner als 2 SiOH/$nm^2$, besonders bevorzugt von 1,7 bis 1,9 SiOH/$nm^2$ auf.

Es können bei hoher Temperatur (>1000 °C) hergestellte Kieselsäuren eingesetzt werden. Besonders bevorzugt sind pyrogen hergestellte Kieselsäuren. Es können auch hydrophile Kieselsäuren eingesetzt werden, die frisch hergestellt direkt aus dem Brenner kommen, zwischengelagert oder bereits handelsüblich verpackt sind. Es können auch hydrophobierte Kieselsäuren z.B. handelsübliche, eingesetzt werden.

Es können unverdichtete, mit Schüttdichten < 60 g/l, aber auch verdichtete, mit Schüttdichten > 60 g/l, Kieselsäuren eingesetzt werden.

Es können Gemische aus verschiedenen Kieselsäuren eingesetzt werden, so z.B. Mischungen aus Kieselsäuren unterschiedlicher BET-Oberfläche, oder Mischungen aus Kieselsäuren mit unterschiedlichem Hydrophobier- oder Silyliergrad.

Als Silyliermittel zur Herstellung der Kieselsäure mit geringem Gehalt an Silanolgruppen, die homogen verteilte polare Oberflächengruppen aufweist, wird ein

**Silyliermittel**

enthaltend polare und unpolare Gruppen eingesetzt.

Verfahren zur Herstellung einer Kieselsäure, wobei die Kieselsäure mit einem

**I) Silyliermittel mit unpolaren Gruppen**

I a) Organosilan der Formel

$$R^1_n SiX_{4-n}$$

wobei n = 1, 2 oder 3 ist
oder Mischungen diesen Organosilanen,
wobei $R^1$ ein einfach oder mehrfach ungesättigter, einwertiger, gegebenenfalls halogenierter, Kohlenwasserstoffrest mit 1 bis 18 C-Atomen ist und dabei gleich oder verschieden sein kann und X = Halogen, Stickstoffrest, $OR^2$, $OCOR^2$, $O(CH_2)_x OR^2$ bedeutet,
wobei $R^2$ Wasserstoff oder ein einwertiger Kohlenwasserstoffrest mit 1 bis 12 C-Atomen bedeutet
und x = 1, 2, 3 bedeutet
oder

I b) Organosiloxan aufgebaut aus Einheiten der Formel

$$(R^1{}_3SiO_{1/2}),$$

und/oder

$$(R^1{}_2SiO_{2/2}),$$

und/oder

$$(R^1SiO_{3/2})$$

wobei $R^1$ die obige Bedeutung hat, wobei
die Anzahl von diesen Einheiten in einem Organosiloxan mindestens 2 ist, silyliert wird und Ia und Ib allein oder in beliebigen Gemischen eingesetzt werden können.

Die Organosiloxane sind bevorzugt bei Belegungstemperatur flüssig.

Bei Organosiloxanen mit einer Viskosität von größer als 1000 mPas sind solche bevorzugt, die sich in einem technisch handhabbaren Lösungsmittel, wie vorzugsweise Alkohole wie Methanol, Ethanol, iso-Propanol, Ether wie Diethylether, Tetrahydrofuran, Siloxane wie Hexamethyldisiloxan, Alkane wie Cyclohexan oder n-Octan, Aliphaten wie Toluol oder Xylol, mit einer Konzentration >10% und einer Mischungsviskosität kleiner als 1000 mPas bei Belegungstemperatur lösen lassen.

Unter bei Belegungstemperatur festen Organosiloxanen sind solche bevorzugt, die sich in einem technisch handhabbaren Lösungsmittel (wie oben definiert) mit einer Konzentration größer als 10% und einer Mischungsviskosität kleiner als 1000 mPas bei Belegungstemperatur lösen lassen.

Beispiele für $R^1$ sind Alkylreste wie der Methylrest, der Ethylrest, Propylreste wie der iso- oder der n-Propylrest, Butylreste wie der t- oder n-Butylrest, Pentylreste wie der neo-Pentylrest, die iso-Pentylreste oder der n-Pentylrest, Hexylreste wie der n-Hexylrest, Heptylreste wie der n-Heptylrest, Octylreste wie der 2-Ethyl-hexyl- oder der n-Octylrest, Decylreste wie der n-Decylrest, Dodecylreste wie der n-Dodecylrest, Hexadecylreste wie der n-Hexadecylrest, Octadecylreste wie der n-Octadecylrest, Alkenylreste wie der Vinyl-, der 2-Allyl- oder der 5-Hexenylrest, Arylreste wie der Phenyl-, der Biphenylyl- oder Naphthenylrest, Alkylarylreste wie Benzyl-, Ethylphenyl-, Toluyl- oder die Xylylreste, halogenierte Alkylreste wie der 3-Chlorpropyl-, der 3,3,3-Trifluorpropyl oder der Perfluorhexylethylrest, halogenierte Arylreste wie der Chlorphenyl oder Chlorbenzylrest.

Bevorzugte Beispiele für $R^1$ sind der Methylrest, der Octylrest und der Vinylrest, besonders bevorzugt ist der Methylrest.

Beispiele für $R^2$ sind Alkylreste wie der Methylrest, der Ethylrest, Propylreste wie der iso- oder der n-Propylrest, Butylreste wie der t- oder n-Butylrest, Pentylreste wie der neo-Pentylrest, die iso-Pentylreste oder der n-Pentylrest, Hexylreste wie der n-Hexylrest, Heptylreste wie der n-Heptylrest, Octylreste wie der 2-Ethyl-hexyl- oder der n-Octylrest, Decylreste wie der n-Decylrest, Dodecylreste wie der n-Dodecylrest.
Bevorzugte Beispiele für $R^2$ sind der Methyl- und Ethylrest.

Beispiele für Organosilane sind Methyltrichlorsilan, Dimethyldichlorsilan, Trimethylchlorsilan, Methyltrimethoxysilan, Dimethyldimethoxysilan, Trimethylmethoxysilan, Methyltriethoxysilan, Dimethyldiethoxysilan, Trimethylethoxysilan, Methyltriacetoxysilan, Dimethyldiacetoxysilan, Trimethylacetoxysilan, Octylmethyldichlorsilan, Octyltrichlorsilan, Octadecylmethyldichlorsilan, Octadecyltrichlorsilan, Vinyltrichlorsilan, Vinlymethyldichlorsilan, Vinyldimethylchlorsilan, Vinyltrimethoxysilan, Vinylmethyldimethoxysilan, Vinyldimethylmethoxysilan, Vinyltriethoxysilan, Vinylmethyldiethoxysilan, Vinyldimethylethoxysilan, Hexamethyldisilazan, Divinyltetramethyldisilazan, Bis(3,3-trifluorpropyl)tetramethyldisilazan, Octamethylcyclotetrasilazan, Trimethylsilanol.

Es können auch beliebige Gemische aus Organosilanen eingesetzt werden.

Gemische aus Methyl-Chlorsilanen einerseits oder Alkoxysilanen und gegebenenfalls Disilazanen andererseits sind bevorzugt.

Bevorzugt ist Methyltrichlorsilan, Dimethyldichlorsilan und Trimethylchlorsilan oder Hexamethyldisilazan.

Beispiele für Organosiloxane sind lineare oder cyclische Dialkylsiloxane mit einer mittleren Anzahl an Dialkylsiloxyeinheiten von größer als 3. Die Dialkylsiloxane sind bevorzugt Dimethylsiloxane. Besonders bevorzugt sind lineare Polydimethylsiloxane mit folgenden Endgruppen: Trimethylsiloxy, Dimethylhydroxysiloxy, Dimethylchlorsiloxy, Methyldichlorsiloxy, Dimethylmethoxysiloxy, Methyldimethoxysiloxy, Dimethylethoxysiloxy, Methyldiethoxysiloxy, Dimethylacetoxysiloxy, Methyldiacetoxysiloxy, Dimethylhydroxysiloxy, wobei die Endgruppen gleich oder unterschiedlich sein können.
Besonders bevorzugt sind unter den genannten Polydimethylsiloxanen solche mit einer Viskosität bei 25°C von 2 bis 100 mPas und mit den Endgruppen Trimethylsiloxy oder Dimethylhydroxysiloxy.

Weitere Beispiele für Organosiloxane sind flüssige oder lösliche Siliconharze, insbesondere solche, die als Alkylgruppe Methylgruppen enthalten.

Besonders bevorzugt sind solche, die $R^1_3SiO_{1/2}$ und $SiO_{4/2}$ Einheiten enthalten oder solche, die $R^1SiO_{3/2}$ und gegebenenfalls $R^1_2SiO_{2/2}$ Einheiten enthalten. Hierbei ist $R^1$ bevorzugt Methyl.

**II) Silyliermittel mit polaren Gruppen**

**II a) Organosilane** der Formel

$$R^3_mR^1_nSiX_1,$$

wobei m + n + 1 = 4,
n = 0, 1 oder 2
und m = 1, 2, oder 3 ist
oder Mischungen aus Silanen oder Organosilanen mit n = 0 bis 2 und m = 1 bis 3, wobei m = 1 bevorzugt ist.

$R^3$ bedeutet Wasserstoff oder ein einwertiger oder zweiwertiger, ein oder mehrere, gleiche oder verschiedene, Heteroatome Y enthaltender Kohlenwasserstoffrest mit 1 bis 12 C-Atomen, bevorzugt 3 bis 8 C-Atomen. Der Kohlenwasserstoffrest kann Si-C gebunden oder Si-O-C gebunden vorliegen. Bevorzugt ist Si-C gebunden. Handelt es sich um einen zweiwertigen Kohlenwasserstoffrest, so kann dieser an 2 Si-Atome gebunden sein oder ein Organo-Silan der Struktur $X_{4-n-m}R^1_nSiR^3_mSiR^1_nX_{4-n-m}$ aufweisen.

Das Heteroatom Y ist vorzugsweise ein Element der 3., 4. (nicht C), 5. und 6. Hauptgruppe im Periodensystem der Elemente. Bevorzugte Beispiele für Y sind: N, P, O und S.

Vorzugsweise ist Y in C-Y Strukturen enthalten.

Beispiele für C-Y Strukturen sind:

Y = N:     $C-NR^4_2$ (Amin), $C-NR^4-Si=-$ (Amin) $C=NR^4$, (Imin) C(O)-N-, $CR^4=N-$, C $(OR^4)$ =N-, C≡N (Nitril), C≡N=O (Cyanat), N=C=O (Isocyanat), C=N-OH (Hydroxylamin)

Y = P:     C- $PR^4_2$ (Phosphine), $C-P=O(-O-)_2$, (Phosphonate, ihre Säure und ihre Ester) C-P=O(-O-)-C, (Phosphinate, ihre Säure und Ester)

Y = O:     C-O-H (Carbinol), C-O-C (Ether), C=O (Keton, Aldehyd), C(O)-O- (Carbonsäure(ester)), C(O)C= (Epoxidring)

Y = S:     C-S-H (Mercaptan), C-S-C (Sulfid), $C-S_x-C$ (Poly-Sulfid mit X = 2,3,4,5,6,7 und 8), -C(S)-S- (Thiocarbonsäure), C-S(=O)-C (Sulfoxid), $C-S(=O)_2$ (Sulfon), C-S=O(-O-) (Sulfinsäure(ester)), $C-S=O(-O-)_2$ Sulfonsäure(ester)), -N=C=S (Isothiocyanat), -S-C≡N (Thiocyanat)

$R^4$ bedeutet Wasserstoff oder ein einwertiger Kohlenwasserstoffrest mit 1 bis 12 C-Atomen.

Beispiele für einwertige N-haltige Reste $R^3$ sind n-Aminoalkylreste, wie 3-Aminopropylreste, wobei die Aminopropylreste primäre, sekundäre und tertiäre Aminoreste sein können. Ein Beispiel für einen primären Aminorest ist der 3-Aminopropylrest. Beispiele für sekundäre Aminoreste sind der Cyclohexyl-, Ethyl- oder Methyl-Amino-Propyl-Rest, Beispiele für tertiäre Aminoreste sind der Dimethyl- und der Diethyl-amino-propylrest. Beispiele für gemischte primäre, sekundäre und tertiäre Aminoreste sind der Aminoethyl-3-Aminopropylrest, der Diethyl-amino-ethyl-amino-propylrest. Beispiele für weitere N-haltige Reste sind Alkyliminoreste, Alkylcyanoreste wie der 3-Cyanopropylrest, Alkylamidoreste, Alkylimidoreste, Alkylhydroxylaminoreste und Alkyloximoreste.

Beispiele für zweiwertige N-haltige Reste $R^3$ sind N,N'-Bis-(n-Alkyl)-Alkylendiamin-Reste, wie der N,N'-Bis-propyl-Ethylendiamin-Rest.

Beispiele für zweiwertige P-haltige Reste $R^3$ sind Phosphinatoalkylsilylreste, wie zum Beispiel die freie Säure oder das Natriumsalz des 2-Phosphinato-Bis-[ethyl-dimethylsilyl] Rests (z.B. ≡Si-CH$_2$-CH$_2$-P(=O) (O-Na$^+$)-CH$_2$-CH$_2$-Si≡) Beispiele für einwertige P-haltige Reste $R^3$ sind Phosphonatoalkylreste.

Beispiele für einwertige O-haltige Reste $R^3$ sind Polyalkylenoxidreste und Polyalkylenoxid-Alkylreste, wie Carbinol- und Alkoxy-terminierte Polyalkylenoxidreste und Polyalkylenoxid-Alkylreste, wie Carbinol und Alkoxy-terminierte Polyethylenoxid-Alkylreste und Polypropylenoxid-Alkylreste, bevorzugt mit 3 bis 20 Kettengliedern, wie Acryloxyalkylreste, Alkylacryloxyalkylreste wie der 3-Methacryloxypropylrest, Carbinolreste, Etherreste wie Alkyloxyalkylreste, Glycidoxyalkylreste wie der 3-Glycidoxypropylrest, Säureanhydridalkylreste wie der Bernsteinsäureanhydrid-Propylrest, Alkylesteralkylreste wie der 3-Acetoxypropylrest.

Beispiele für einwertige S-haltige Reste $R^3$ sind Mercaptoalkylreste wie der 3-Mercaptopropylrest, Isothiocyanatreste wie der 3-Isothiocyanatopropylrest.

Besonders bevorzugt sind der 3-Aminoethyl-Aminopropylrest, der 3-Aminopropylrest, der 3-Diethylamino-propylrest, der Natriumsalz 2-Phosphinatoethylrest, der Butoxy-terminierte 3-Polyethylenoxid-Propylrest mit 4 bis 6 Polyethylenoxid-Einheiten, der 3-Methacryloxypropylrest, der Isothiocyanatopropylrest, der 3-Mercaptopropylrest, der Isothiocyanatopropylrest, Wasserstoff.

Beispiele für polare Silyliermittel sind solche, die bevorzugt aus Aminoethyl-Aminopropyltrimethoxysilan, Aminoethyl-Aminopropyltriethoxysilan, Diethylaminopropylmethyldimethoxysilan, Diethylaminopropylmethyldiethoxysilan, Cyclohexylaminopropyltrimethoxysilan, Cyclohexylaminopropyldimethoxysilan, N,N'-Bis-trimethoxysilylpropyl-Ethylendiamin, 3-glycidoxypropyltrimethoxysilan, 3-Bernsteinsäure-Propyltrimethoxysilan, 3-Mercaptopropyltrimethoxysilan, 3-Methacryloxypropyltriethoxysilan, 3-Thioisocyanatopropyltrimethoxysilan, 3-Thioisocyanatopropyltriethoxysilan, Hydroxylethylenglykolpropyldimethyl-endständige Polydimethylsiloxane mit einer Viskosität von größer als 500 mPas, das Natriumsalz von Phosphinato-Siliciumverbindungen der Struktur $P(O_2Na)$ $[C_2H_4Si(CH_3)_2OSi(CH_3)_2C_2H_4Si(OCH_3)_3]_2$ = Phosphinato-Bis-[ethyl-dimethylsiloxy-ethyl-trialkoxysilan und $P(O_2Na)$ $[C_2H_4Si(CH_3)_2OSi(CH_3)_2C_2H_4]_n$, ausgewählt werden.

**II b) Organosiloxan** aufgebaut aus einer oder mehreren, gleichen oder verschiedenen Einheiten der Formel

$$R^3{}_q R^1{}_r SiO_{(4-q-r)/2},$$

wobei
q = 0, 1, 2 oder 3
r = 0, 1 oder 2
und q + r < 4 ist.

Die Anzahl von diesen Einheiten in einem Organosiloxan beträgt mindestens 2.

Organosiloxane sind bevorzugt bei Belegungstemperatur flüssig. Bei solchen mit einer Viskosität von größer als 1000 mPas sind solche bevorzugt, die sich in einem technisch handhabbaren Lösungsmittel (wie oben definiert) mit einer Konzentration >10% und einer Mischungsviskosität kleiner als 1000 mPas bei Belegungstemperatur lösen lassen.

Unter bei Belegungstemperatur festen Organosiloxanen sind solche bevorzugt, die sich in einem technisch handhabbaren Lösungsmittel mit einer Konzentration größer als 10% und einer Mischungsviskosität kleiner als 1000 mPas bei Belegungstemperatur lösen lassen.

Die Silyliermittel Ia und Ib sowie IIa und IIb können allein oder in beliebigen Gemischen eingesetzt werden, mit der Maßgabe, dass Silyliermittel (II) mit polaren Gruppen zumindest 1 - 80 Gew. %, bevorzugt 5 - 50 Gew. %, besonders bevorzugt 10 - 30 Gew. % der Gesamtmenge an Silyliermittel (I) und (II) beträgt.

**Herstellung:**

Die Herstellung (A) der hydrophilen Ausgangskieselsäure erfolgt bevorzugt nach bekannter Technik der Herstellung pyrogener Kieselsäure bei hoher Temperatur durch die Umsetzung eines Silans in einer Wasserstoff-Sauerstoffflamme bei Temperaturen von 1000 - 1500 °C. Als Silan werden bevorzugt Tetrachlorsilan, Methyltrichlorsilan, Hydrogentrichlorsilan, Hydrogenmethyldichlorsilan, Tetramethoxysilan, Tetraethoxysilan, Hexamethyldisiloxan, oder deren Gemische eingesetzt. Tetrachlorsilan ist besonders bevorzugt. Nach Umsetzung wird die Kieselsäure von Prozessgas getrennt, dies erfolgt bevorzugt über Filter, und anschließend von restlichem Chlorwasserstoffgas gereinigt, dies erfolgt bevorzugt in einem heißen Gasstrom, als Gase sind bevorzugt Luft oder Stickstoff bei Temperaturen von vorzugsweise 250°C - 500 °C, bevorzugt 250°C - 400°C und besonders bevorzugt 350°C - 400 °C. Es wird dabei jedenfalls nicht mehr als 10 Gew.% Wasser bezogen auf das gesamte Gewicht der Kieselsäure zugegeben, vorzugsweise wird nicht mehr als 5 Gew.%, bevorzugt nicht mehr als 2,5 Gew.%, besonders bevorzugt überhaupt kein Wasser zugegeben.

Die Oberflächenbehandlung oder Silylierung (B) der Kieselsäure erfolgt in 3 Schritten, nämlich (1) Belegung, (2) Reaktion, (3) Reinigung.

Die Oberflächenbehandlung wird bevorzugt in einer Atmosphäre durchgeführt, die nicht zur Oxidation der silylierten Kieselsäure führt, d.h. bevorzugt weniger als 10 Vol.% Sauerstoff, besonders bevorzugt weniger als 2,5 Vol. %, beste Ergebnisse werden erzielt bei weniger als 1 Vol.% Sauerstoff.

Belegung, Reaktion und Reinigung können als diskontinuierlicher oder kontinuierlicher Prozess durchgeführt werden.

Aus technischen Gründen bevorzugt ist eine kontinuierliche Reaktionsführung.

In einer besonders bevorzugten Ausführung ist zwischen den getrennten Einheiten der Beladung und der Reaktion kein weiterer Förderschritt zum Transport der Kieselsäure erforderlich; die Förderung erfolgt gravimetrisch, durch schwerkraftbedingten Fall. Die Trennung zwischen Beladung und Reaktion kann hierbei durch ein geeignetes mechanisches Trennsystem realisiert werden, wie eine Klappe, eine Doppelklappe oder geeignete ausgelegte Schleusensysteme, wie Zellradschleusen. In einer anderen Ausführung kann die Trennung durch eine Verjüngung des Behälterquerschnitts um größer als Faktor 2 oder durch eine Rohrleitung realisiert werden, wobei dieser Übergang durch Rührorgane von Verstopfungen freigehalten wird. Die Vorgehensweise hat den Vorteil, dass die Kieselsäure, im Zustand der zunächst physikalischen Beladung mit Silyliermittel, immer in engstem Kontakt mit diesem verbleibt, bis zu dem Zeitpunkt, an dem die vollständige Fixierung des Silyliermittels auf der Kieselsäure erfolgt ist.

In einer weiteren besonders bevorzugten Ausführung ist zwischen den getrennten Einheiten der Reaktion und der Reinigung kein weiterer Förderschritt zum Transport der Kieselsäure erforderlich; die Förderung erfolgt gravimetrisch, durch schwerkraftbedingten Fall. Die Trennung zwischen Reaktion und Reingung kann hierbei durch ein geeignetes mechanisches Trennsystem realisiert werden, wie eine Klappe, eine Doppelklappe oder geeignete ausgelegte Schleusesysteme, wie Zellradschleusen. Insbesondere erfolgen die getrennt aufeinander folgenden Schritten jeweils in einem eigenen Gefäß.

In einer besonders bevorzugten Ausführung sind Silyliermittel (I) und (II) im Schritt der Belegung Flüssigkeiten, d.h. die Belegungstemperatur liegt unter dem tiefsten ihrer Siedepunkte; in einer davon hervorgehoben besonders bevorzugten Ausführung sind Silyliermittel (I) und (II) in allen drei Schritten der Silylierung, der Belegung, der Reaktion und der Reinigung, Flüssigkeiten.

Die **Belegung** erfolgt bei Temperaturen von 0-150 °C, bevorzugt 20-80 °C, besonders bevorzugt 20-50 °C; bevorzugt wird der Belegungsschritt auf 30-50 °C gekühlt.

Die Verweilzeit beträgt 1 Min - 24 h, bevorzugt, aus Gründen der Raumzeitausbeute, 15 Min bis 180 Min.

Die Silyliermittel werden bevorzugt als Flüssigkeit zugefügt. Die Silyliermittel werden vorzugsweise in die pulverförmige Kieselsäure zugemischt.

Dies geschieht vorzugsweise durch Düsentechniken, oder vergleichbare Techniken, wie effektive Verdüsungstechniken, wie Verdüsen in 1-Stoffdüsen unter Druck (vorzugsweise 5 bis 20 bar), Versprühen in 2-Stoffdüsen unter Druck (vorzugsweise Gas und Flüssigkeit 2-20 bar), Feinstverteilen mit Atomizern oder Gas-Feststoff-Austauschaggregaten mit beweglichen, rotierenden oder statischen Einbauten, die eine homogene Verteilung der flüssigen Silyliermittel mit der pulverförmigen Kieselsäure erlauben.

Bevorzugt wird das Silyliermittel als feinstverteiltes Aerosol zugefügt, dadurch gekennzeichnet, dass das Aerosol eine Sinkgeschwindigkeit von 0,1 - 20 cm/s aufweist.

Bevorzugt erfolgt die Beladung der Kieselsäure und die Reaktion mit dem Silyliermittel unter mechanischer oder gasgetragener Fluidisierung. Besonders bevorzugt ist die mechanische Fluidisierung.

Eine Gas-getragene Fluidisierung kann durch alle inerten Gase erfolgen, die nicht mit dem Silyliermittel, der Kieselsäure, der silylierten Kieselsäure und Nebenreaktionsprodukten reagieren, also nicht zu Nebenreaktionen, Abbaureaktionen, Oxidationsvorgängen und Flammen- und Explosionserscheinungen führen, wie vorzugsweise $N_2$, Ar, andere Edelgase, $CO_2$, etc. Die Zuführung der Gase zur Fluidisierung erfolgt bevorzugt im Bereich von Leerrohrgasgeschwindigkeiten von 0,05 bis 5 cm/s, besonders bevorzugt von 0,5-2,5 cm/s.

Besonders bevorzugt ist die mechanische Fluidisierung, die ohne zusätzlichen über die Inertisierung hinausgehenden Gaseinsatz, durch Flügelrührer, Ankerrührer, und sonstige geeignete Rührorgane erfolgt.

In einer besonders bevorzugten Ausführung werden die nicht abreagierten Silyliermittel, Nebenreaktionsprodukte, nicht chemisch fixierte und gegebenenfalls veränderte Silyliermittelüberschüsse, Abreinigungsprodukte und Abgase aus dem Reinigungsschritt wieder in den Schritt der Belegung und Beladung der Kieselsäure zurückgeführt; dies kann teilweise oder vollständig geschehen, bevorzugt zu 10 - 90 % des gesamten Volumenstromes der aus der Abreinigung austretenden Gasvolumina.

Dies geschieht in geeignet temperierten Vorrichtungen.

Diese Rückführung erfolgt bevorzugt in nicht-kondensierter Phase, also als Gas oder als Dampf. Diese Rückführung kann als Stofftransport entlang eines Druckausgleichs erfolgen oder als gesteuerter Stofftransport mit den technisch üblichen Systemen des Gastransports, wie Ventilatoren, Pumpen, Druckluftmebranpumpen. Da die Rückführung der nichtkondensierten Phase bevorzugt ist, empfiehlt sich gegebenenfalls die Beheizung der rückführenden Leitungen.

Die Rückführung der Abreaktionsprodukte und Nebenreaktionsprodukte kann dabei zwischen 5 und 100 Gew.%, bezogen auf deren Gesamtmasse, bevorzugt zwischen 30 und 80 Gew.% liegen. Die Rückführung kann dabei, bezogen auf 100 Teile frisch eingesetztes Silyliermittel zwischen 1 und 200 Teile, bevorzugt 10 bis 30 Teile betragen.

Die Abreinigungs- und Nebenreaktionsprodukte können dabei sowohl neutral, sauer oder basisch sein.

In einer Ausführung können diese Abreinigungs- und Nebenreaktionsprodukte neutral sein und reaktive Siliciumorganische Verbindungen darstellen.

In einer anderen Ausführung können diese Abreinigungs- und Nebenreaktionsprodukte basischen Charakters sein, im Sinne einer Brönsted oder Lewis Base.

In noch einer anderen Ausführung können diese Abreinigungs- und Nebenreaktionsprodukte sauren Charakters sein, im Sinne einer Brönsted oder Lewis Säure.

Die Rückführung der Reaktionsnebenprodukte und Abreinigungsprodukte der Silylierreaktion in die Belegung erfolgt bevorzugt kontinuierlich.

Die **Reaktion** erfolgt bevorzugt bei Temperaturen von 40-200 °C, bevorzugt 80-160 °C und besonders bevorzugt bei 80-120 °C.

Die Reaktionszeit beträgt 5 Min bis 48 h, vorzugsweise 10 Min bis 4 h.

Wahlweise können protische Lösungsmittel hinzugefügt werden, wie flüssige oder verdampfbare Alkohole oder Wasser; typische Alkohole sind iso-Propanol, Ethanol und Methanol. Es können auch Gemische der oben genannten protischen Lösungsmittel zugefügt werden. Vorzugsweise werden 1 bis 50 Gew.% an protischen Lösungsmittel bezogen auf die Kieselsäure zugefügt, besonders bevorzugt 5 bis 25 Gew.%. Besonders bevorzugt ist Wasser.

Wahlweise können saure Katalysatoren, von saurem Charakter im Sinne einer Lewis Säure oder einer Brönsted Säure, wie Chlorwasserstoff oder basische Katalysatoren, von basischem Charakter, im Sinne einer Lewis Base oder einer Brönsted Base, wie Ammoniak, zugesetzt werden. Bevorzugt werden diese in Spuren zugesetzt, d.h kleiner als 1000 ppm. Besonders bevorzugt werden keine Katalysatoren zugesetzt.

**Die Reinigung** von Reaktionsnebenprodukten erfolgt bei einer Reinigungstemperatur von 20 bis 200 °C, bevorzugt 50°C bis 150°C, besonders bevorzugt von 50 bis 120 °C.

- Der Reinigungsschritt ist vorzugsweise durch Bewegung gekennzeichnet, wobei langsame Bewegung und geringes Durchmischen besonders bevorzugt ist. Die Rührorgane werden dabei vorteilhafterweise so eingestellt und bewegt, dass bevorzugt ein Mischen und ein Fluidisieren, jedoch nicht völlige Verwirbelung, eintritt.

Der Reinigungsschritt kann weiterhin durch erhöhten Gaseintrag gekennzeichnet sein, entsprechend einer Leerrohrgasgeschwindigkeit von 0,001 bis 10 cm/s, bevorzugt 0,01 bis 1 cm/s. Dies kann durch alle inerten Gase erfolgen, die nicht mit dem Silyliermittel, der Kieselsäure, der silylierten Kieselsäure und Nebenreaktionsprodukten reagieren, also nicht zu Nebenreaktionen, Abbaureaktionen, Oxidationsvorgängen und Flammen- und Explosionserscheinungen führen, wie vorzugsweise $N_2$, Ar, andere Edelgase, $CO_2$, etc.

Zusätzlich können während der Silylierung oder im Anschluss an die Reinigung Verfahren zur mechanischen Verdichtung der Kieselsäure eingesetzt werden, wie zum Beispiel Presswalzen, Mahlaggregate, wie Kollergänge und wie Kugelmühlen, kontinuierlich oder diskontinuierlich, Verdichtung durch Schnecken oder Schraubenmischer, Schrauben-benverdichter, Brikettierer, oder Verdichten durch Absaugen des Luft- oder Gasinhaltes durch geeignete Vakuummethoden.

Besonders bevorzugt ist die mechanische Verdichtung während der Silylierung, im Schritt (II) der Reaktion durch Presswalzen, oben genannte Mahlaggregate wie Kugelmühlen oder Verdichtung durch Schnecken, Schraubenmischer, Schraubenverdichter, Brikettierer.

In einer weiteren besonders bevorzugten Verfahrensweise werden im Anschluss an die Reinigung Verfahren zur mechanischen Verdichtung der Kieselsäure eingesetzt werden, wie Verdichten durch Absaugen des Luft- oder Gasinhaltes durch geeignete Vakuummethoden.

Zusätzlich können in einer besonders bevorzugten Verfahrensweise im Anschluss an die Reinigung Verfahren zur Desagglomerierung der Kieselsäure eingesetzt werden, wie Stiftmühlen oder Vorrichtungen zur Mahlsichtung, wie Stiftmühlen, Hammermühlen, Gegenstrommühlen, Prallmühlen oder Vorrichtungen zur Mahlsichtung.

Vorzugsweise erfolgt ein Einsatz von größer als 3 Gew.% der Summe des Silyliermittels, bevorzugt größer als 10 Gew.% Silyliermittel, (bezogen auf die auf der Kieselsäure nach Silylierung gebundenen Silyliermittelreste) pro einer eingesetzten hydrophilen Kieselsäure-Oberfläche von 100 $m^2$/g BET-Oberfläche (gemessen nach der BET Methode nach DIN 66131 und 66132).

Ein weiterer bevorzugter Gegenstand (2) der Erfindung ist eine Kieselsäure mit geringem Gehalt an Silanolgruppen mit homogen verteilten und definiertem Anteil an polaren Gruppen an der Oberfläche, mit einer mittleren Primärteilchen-Partikelgröße kleiner als 100 nm, bevorzugt mit einer mittleren Primärteilchen-Partikelgröße von 5 bis 50 nm, wobei diese Primärteilchen nicht isoliert in der Kieselsäure existieren, sondern Bestandteile größerer Aggregate (Definition nach DIN 53206) sind, die einen Durchmesser von 100 bis 1000 nm aufweisen und Agglomerate (Definition nach DIN 53206) aufbauen, die in Abhängigkeit von der äußeren Scherbelastung Größen von 1 bis 500 $\mu$m aufweisen, wobei die Kieselsäure eine spezifischen Oberfläche von 10 bis 300 $m^2$/g (gemessen nach der BET Methode nach DIN 66131 und 66132) aufweist, wobei die Kieselsäure eine fraktale Dimension der Masse $D_m$ von kleiner als oder gleich 2,8, bevorzugt kleiner als oder gleich 2,7, besonders bevorzugt von 2,4 bis 2,6, und eine Dichte an Oberflächen-Silanolgruppen SiOH von kleiner als 0,6 SiOH/$nM^2$, bevorzugt von kleiner als 0,25 SiOH/$nm^2$, besonders bevorzugt von kleiner als 0,15 SiOH/$nm^2$ und pro 100 $m^2$/g spezifischer Oberfläche (gemessen nach der BET Methode nach DIN 66131 und 66132) einen Kohlenstoffgehalt von mindestens 1,0 Gew.-%, bevorzugt größer 1,5 Gew.-% aufweist.

Die weitere erfindungsgemäße Kieselsäure (2) weist bei Kontakt mit Wasser keine Wasser-benetzbaren Anteile auf.

Besonderes Kennzeichen der weiteren erfindungsgemäßen Kieselsäure (2) ist, dass ihre Oberfläche einen homogenen und definierten Anteil an polaren Funktionen aufweist. Diese und die Silyliermittelreste und restlichen nicht reagierten Silanolgruppen sind, auch mikroskopisch, homogen gleichmäßig verteilt. Dies kann z.B. durch Solvatochromie, z.B. mit Bis-Phenylen-di-Cyano-Eisen(II) in Dichlorethan, oder mittels Adsorptionsmessungen, wie Statisch-Volumetrisch Gasadsorption oder Inverse Gaschromatographie, gezeigt werden.

Die weitere erfindungsgemäße Kieselsäure (2) weist eine mittlere Primärteilchen-Partikelgröße kleiner als 100 nm, bevorzugt mit einer mittleren Primärteilchen-Partikelgröße von 5 bis 50 nm auf (Erklärung: Primärteilchen existieren nicht isoliert in Kieselsäuren, sondern sind Bestandteile größerer Aggregate und Agglomerate).

Die weitere erfindungsgemäße Kieselsäure (2) weist insbesondere eine spezifische Oberfläche größer als 25 $m^2/g$ (gemessen nach der BET Methode nach DIN 66131 und 66132) auf.

Die weitere erfindungsgemäße KIESELSÄURE (2) besteht aus Aggregaten (Definition nach DIN 53206) im Bereich von Durchmessern 100 bis 1000 nm, bevorzugt 100 bis 500 nm, besonders bevorzugt von 100 bis 250 nm.

Die weitere erfindungsgemäße KIESELSÄURE (2) besteht aus Agglomeraten (Definition nach DIN 53206), die unter Scher-freien oder Scher-armen Meßbedingungen Agglomerate in der Größe von 1 $\mu$m bis 500 $\mu$m bevorzugt aufweisen.

Die weitere erfindungsgemäße KIESELSÄURE (2) weist pro 100 $m^2/g$ spezifischer Oberfläche (gemessen nach der BET Methode nach DIN 66131 und 66132) einen Kohlenstoffgehalt von mindestens 1,0 Gew.-%, bevorzugt größer 1,5 Gew.-%, auf.

Die weitere erfindungsgemäße KIESELSÄURE (2) weist eine Dichte an Oberflächen-Silanolgruppen SiOH von kleiner als 0,6 $SiOH/nm^2$, bevorzugt von kleiner als 0,25 $SiOH/nm^2$, besonders bevorzugt von kleiner als 0,15 $SiOH/nm^2$, auf.

Besondere Kennzeichen der erfindungsgemäßen Kieselsäure sind, dass ihre Oberfläche physikal-chemisch homogen ist, und dass die Silyliermittelreste, polare Gruppen und restliche, nicht reagierten Silanolgruppen, auch mikroskopisch, homogen gleichmäßig verteilt sind. Dies kann mittels Adsorptionsmessungen, wie statische-volumetrische Gasadsorption oder inverse Gaschromatographie, gezeigt werden.

In einer bevorzugten Ausführung besitzt die erfindungsgemäße Kieselsäure eine vollständig chemisch gebundene Silyliermittelschicht (d.h. mit Tetrahydrofuran sind bei T = 25 °C weniger als 0,5 Gew.% der siliciumorganischen Silyliermittelschicht extrahierbar, wobei der Nachweis der extrahierten siliciumorganischen Verbindungen vorteilhafterweise mittels Si-spezifischer Atom-Absorptions-Spektrometrie erfolgt).

Die weitere erfindungsgemäße Kieselsäure (2) ist im weiteren dadurch gekennzeichnet, dass sie in pulverförmigen Systemen Haftung auf den Pulveroberflächen aufweist, damit nicht zur Reagglomeration und zur Separierung neigt, und somit belastungsstabile und lagerstabile Mischungen Kieselsäure - Pulver ermöglicht. Dies gilt im besonderen für den Einsatz in nichtmagnetischen und magnetischen Tonern und Entwicklern, die 1- und 2-Komponenten Systeme sein können.

Überraschenderweise wurde nun gefunden, dass ein Unterlassen einer zusätzlichen Zugabe von Wasser im Reinigungsschritt der Herstellung der hydrophilen Kieselsäure, die mit Silyliermitteln (I) und (II) umgesetzt wird, zu einer höheren Reaktivität der Kieselsäureoberfläche führt. Weiterhin überraschend wurde gefunden, dass die Silylierung einer solchen Kieselsäure zur Bildung einer gleichmäßigen und homogenen Silyliermittelschicht führt, und somit zu einer homogenen Verteilung von polaren und unpolaren Gruppen. Dies ermöglicht die kontrollierte Einstellung einer definierten Verteilung von polaren und unpolaren Gruppen auf der Silyliermitteloberfläche.

Überraschenderweise wurde außerdem gefunden, dass die Rückführung der Reaktionsnebenprodukte und Abreinigungprodukte der Silylierreaktion zurück in den Schritt der Belegung zu einer effektiveren Belegung und zu einer erhöhten Reaktionsausbeute führt. Diese Rückführung erfolgt bevorzugt in nicht-kondensierter Phase, also als Gas oder als Dampf. Diese Rückführung kann als Stofftransport entlang eines Druckausgleichs erfolgen oder als gesteuerter Stofftransport mit den technisch üblichen Systemen des Gastransports, wie Ventilatoren, Pumpen, Druckluftmembranpumpen. Da die Rückführung der nichtkondensierten Phase bevorzugt ist, empfiehlt sich gegebenenfalls die Beheizung der rückführenden Leitungen.

Es werden höhere Reaktionsausbeuten und erhöhte Silyliergrade erhalten.

Vorteile der Erfindung sind:

1) Hohe Reaktionsausbeuten und daher wirtschaftlich und Ressourcen schonend.
2) Hoher Silyliergrad bei minimalem Einsatz von Silyliermittel.
3) Gezielte Einstellung eines definierten Verhältnisses von polaren und unpolaren Gruppen auf der Kieselsäureoberfläche.
4) Homogene Verteilung von polaren Gruppen neben unpolaren Gruppen in die Oberflächenschicht der Kieselsäure.

Weitere Gegenstände sind Toner, Entwickler, Ladungssteuerungshilfsmittel und / oder Fließhilfsmittel für pulverförmige Systeme, die die weitere erfindungsgemäße Kieselsäure (2) enthalten.

Ein Toner hat typischerweise folgende Zusammensetzung:

- Fest-Harz als Binder, das ausreichend hart ist, um ein Pulver hieraus herzustellen, bevorzugt mit einem Molekulargewicht über 10000, bevorzugt mit einem Anteil an Polymeren von einem Molekulargewicht unter 10000 von weniger als 10%, z.B. ein Polyesterharz, das ein Co-Kondensat aus Diol und Carbonsäure,

- ester, oder -anhydrid sein kann, z.B. mit einer Säurezahl von 1-1000, bevorzugt 5-200, oder ein Polyacrylat oder ein Polystyrol, oder Mischungen, oder Co-Polymerisate hieraus sein kann, und mit einem mittleren Partikeldurchmesser kleiner 20 $\mu$m, bevorzugt kleiner 15 $\mu$m, besonders bevorzugt kleiner 10 $\mu$m. Das Tonerharz kann Alkohole, Carbonsäuren und Polycarbonsäure enthalten.

- Technisch übliche Farbstoffe, wie schwarzer Ruß, Farb-Ruß, Cyan-Farbstoffe, Magenta-Farbstoffe, Gelbe Farbstoffe.

- Typischerweise negative Ladungssteuerungsmittel:

    Ladungssteuernde Additive wie Metall-haltige Azo-Farbstoffe, oder Kupfer-Phthalocyanin Farbstoffe, oder Metall-Komplexe zum Beispiel von alkylierten Salicylsäure-Derivaten oder Benzoesäure, insbesondere mit Bor oder Aluminium, in den erforderlichen Mengen, typischerweise kleiner 5 Gew.%.

- Wahlweise positive Ladungssteuerungsmittel: Ladungssteuernde Additive z.B. vom Typ Nigrosin-Farbstoff, oder Triphenylmethan Farbstoffe substituiert mit tertiären Aminen, oder quaternäre Amoniumsalze wie CTAB (cetyltrimethylammonium bromide = hexadecyltrimethylammonium bromide), oder Polyamine, typischerweise kleiner 5 Gew.%.

- Gegebenenfalls können, zur Herstellung magnetischer Toner, magnetische Pulver zugesetzt werden, wie z.B. Pulver, die in einem magnetischen Feld magnetisiert werden können, wie ferromagnetische Substanzen, wie Eisen, Kobalt, Nickel, Legierungen, oder Verbindungen wie Magnetit, Hermatit oder Ferrit.

- Wahlweise können auch Entwickler zugesetzt werden, wie Eisenpulver, Glaspulver, Nickelpulver, Ferritpulver.

- Erfindungsgemäße Kieselsäure in Gehalten, bezogen auf ein Fest-Harz als Binder mit 20 $\mu$m mittlerem Partikeldurchmesser, von größer 0,01 Gew.%, bevorzugt größer 0,1 Gew.%. Mit abnehmendem mittlerem Partikeldurchmesser des Binders werden u.a. höhere Gehalte an Kieselsäure erforderlich, wobei die notwendige Menge an Kieselsäure umgekehrt proportional zum Partikeldurchmesser des Binders zunimmt. Der Gehalt an Kieselsäure ist vorzugsweise jedoch in jedem Fall kleiner 5 Gew.% bezogen auf Binder Harz.

- Weitere anorganische Zusätze, wie feinteilige und grobteilige Siliciumdioxide, darunter auch solche mit 100 bis 1000 nm mittlere Durchmesser, Aluminiumoxide, wie pyrogene Aluminiumoxide, Titandioxide, wie pyrogene oder Anatas oder Rutile, Zirconoxide.

- Wachse, wie paraffinische Waxe mit 10-500 C-Atomen, Siliconwachse, olefinische Wachse, Wachse mit einer Jodzahl < 50, bevorzugt < 25, und einer Verseifungszahl von 10-1000, bevorzugt 25-300

Der Toner kann in verschiedenen Entwicklungsverfahren eingesetzt werden, wie zur elektrophotografischen Bilderzeugung und Reproduktion, wie z.B. magnetische Bürsten-Verfahren, Kaskaden Verfahren, Einsatz von leitfähigen und nicht leitfähigen magnetischen Systemen, Pulverwolkenverfahren, Entwicklung in Abdruck, und andere.

Ein Nachteil von unpolarer Kieselsäure tritt beim Einsatz als aktiver Füllstoff in Flüssigkeits-, Polymer- und Harzsystemen mittlerer und hoher Polarität auf. Dort treten Probleme der Mischbarkeit und Verträglichkeit auf. Dies ist dann nachteilig, wenn ein inniger Verbund der Kieselsäure mit der umgebenden Matrix gefordert ist. Der erfindungsgemäße homogene Einbau von kontrollierten Anteilen an polaren Funktionen in die Oberfläche einer Kieselsäure mit geringem Gehalt an Silanolgruppen überwindet diesen Nachteil, und erhöht die mechanischen Eigenschaften wie Härte, Festigkeit, Zähigkeit und Abrasionsfestigkeit, etc., des Compounds Kieselsäure -Matrix.

Die erfindungsgemäße KIESELSÄURE ist im weiteren dadurch gekennzeichnet, dass sie in polaren Systemen, wie lösemittelfreien vernetzbaren Polymeren und/oder Harzen, oder wie Lösungen, Suspensionen, Emulsionen und Dispersionen von organischen Harzen in wässrigen Systemen oder organischen Lösemitteln (z.B.: Polyester, Vinylester, Epoxid, Polyurethan, Alkydharze, u.a.) eine hohe Verdickungswirkung aufweist, und damit als rheologisches Additiv in diesen Systemen geeignet ist.

Die erfindungsgemäße KIESELSÄURE ist im weiteren dadurch gekennzeichnet, dass sie in unpolaren Systemen, wie unvernetztem Siliconkautschuk, eine geringe Verdickungswirkung aufweist, dabei zugleich aber eine hohe Verstärkungswirkung in den vernetzten Siliconkautschuken zeigt, und damit als Verstärkerfüllstoff für Siliconkautschuke hervorragend geeignet ist.

Die weitere erfindungsgemäße Kieselsäure (2) liefert in reaktiven Polymeren und Harzen eine optimale chemische Vernetzung mit der umgebenden Matrix.

Ein weiterer Nachteil ist eine hohe Unpolarität der Kieselsäure, wenn sie als Additiv, z.B. als Antiblockmittel, als Rieselhilfsmittel oder zur Steuerung oder Regulierung von triboelektrischen Eigenschaften mit Feststoffen, insbesondere feinteiligen Feststoffen, wie vernetzte Polymer- und Harzsysteme oder anorganische feinteilige Feststoffe, eingesetzt wird. Aus der Unpolarität resultieren Probleme in der Mischbarkeit und Verträglichkeit. Dies führt zu Entmischung der Kieselsäure, wenn sie als Rieselhilfsmittel und / oder als Ladungsregulativ in pulverförmigen Produkten, wie Pulverharzsystemen, wie für Pulverlackbeschichtungen eingesetzt, oder in Tonern und Entwicklern eingesetzt wird. Diese Entmischung steht in Zusammenhang mit mangelnder Kieselsäure -Pulverpartikel-Wechselwirkung. Diese Entmischung hat eine Destabilisierung, und mangelnde Standzeit, des Systems, also z.B. bei Toner-Kieselsäure-Mischungen mangelnde Stabilität unter Belastung wiederholter Kopier- und Aktiviervorgänge, zur Folge.
Der erfindungsgemäße Einbau von kontrollierten Anteilen an polaren Funktionen in die Oberfläche einer Kieselsäure mit geringem Gehalt an Silanolgruppen überwindet diesen Nachteil und erhöht die Langzeitstabilität dieser Systeme.

Die Erfindung betrifft im weiteren den Einsatz der erfindungsgemäßen homogen silylierten Kieselsäure in Entwicklern und Tonern, z.B. nichtmagnetische und magnetische, die 1-Komponenten und 2-Komponenten Systeme sein können. Diese Toner können aus Harzen, wie Styrol- und Acrylharze, und deren Mischungen, oder Polyester- und Epoxyharze, und deren Mischungen, bestehen, und bevorzugt zu Partikelverteilungen von 1-100 $\mu$m vermahlen sein können, oder können Harze sein, die in Polymerisationsverfahren in Dispersion oder Emulsion oder Lösung oder in Masse zu Partikelverteilungen von bevorzugt 1 - 100 $\mu$m hergestellt wurden. Die KIESELSÄURE wird bevorzugt eingesetzt zur Verbesserung und Steuerung des Pulver-Fließverhaltens, und / oder zur Regulierung und Steuerung der triboelektrischen Ladungseigenschaften des Toners oder Entwicklers. Derartige Toner und Entwickler können bevorzugt bei elektrophotografischen Print- und Druckverfahren eingesetzt werden, sie sind auch bei direkten Bildübertragungsverfahren einsetzbar. Dies gilt auch in pulverförmigen Harzen, die als Anstrichsysteme verwendet werden.

Eine weitere Anwendung ist der Einsatz der Kieselsäure bei der Fertigung von künstlichen Zähnen bzw. bei Kunststoffzahnfüllungen, als Füllstoff, z.B. zur Verbesserung der mechanischen Festigkeit bzw. der Abrasionsfestigkeit.

Ein weitere Anwendung ist der Einsatz in Lacken und Farben, insbesondere zur Erzielung von Härte, die für Kratzfestigkeit erforderlich ist.

**Beispiele**

Herstellung der hydrophilen Ausgangskieselsäure

10,8 kg/h Siliciumtetrachlorid werden in einer Mischkammer homogen mit 74,3 Nm$^3$/h Primärluft und 20,7 Nm$^3$/h Wasserstoffgas vermischt und in einer Brennerdüse bekannter Bauart in einer Flamme in eine Brennkammer geleitet. In die Brennkammer werden zusätzlich 12,0 Nm$^3$/h Sekundärluft eingeblasen. Nach Austritt aus der Brennkammer wird das entstandene Kieselsäure-Gasgemisch in einem Wärmetauschersystem auf 120-150°C abgekühlt, und anschließend wird der Feststoff Kieselsäure von der Chlorwasserstoff-haltigen Gasphase in einem Filtersystem getrennt. Bei erhöhter Temperatur werden anschließend durch Zugabe von über die Verbrennung von Erdgas erhitzter Luft ohne weitere Zugabe von Wasser oder Feuchte Reste von Chlorwasserstoff entfernt. Es wird eine pyrogene Kieselsäure mit einer spezifischen Oberfläche, gemessen nach der BET Methode nach DIN 66131 und 66132 von 200 m$^2$/g erhalten, mit einem pH-Wert der 4%igen (Gew%) Dispersion (DIN/ISO 787/9) von 4,1.

Herstellung der silanolgruppenarmen Kieselsäure mit homogener Oberfläche (1)

Beispiel 1-1

In einer kontinuierlichen Apparatur werden bei einer Temperatur von 105°C unter Inertgas N$_2$ zu einem Massestrom von 1000 g/h an hydrophiler KIESELSÄURE, mit einer Feuchte < 1% und einem HCl Gehalt < 100 ppm und mit einer spezifischen Oberfläche von 200 m$^2$/g (gemessen nach der BET Methode nach DIN 66131 und 66132) (erhältlich unter dem Namen WACKER HDK N20 bei Wacker-Chemie GmbH, Burghausen, D), 50 g/h vollentsalztes Wasser (VE-Wasser) in feinstverteilter Form zugedüst, 150 g/h OH-endständiges Polydimethylsiloxan (PDMS) (Viskosität: 40 mPas bei 25 °C), in flüssiger, feinstverteilter Form zugefügt durch Verdüsen über eine Einstoffdüse (Druck 10 bar), sowie durch Verdüsen über eine Einstoffdüse (Druck 7 bar), 30 g/h Dimethyldichlorsilan zugefügt. Die so beladene KIESELSÄURE wird bei einer Verweilzeit von 2 Stunden bei einer Temperatur von 105°C weiter mittels Rühren fluidisiert, und anschließend in einem darunter befindlichen Reaktor bei 300°C zur Reaktion gebracht. Anschließend wird in einem mechanisch bewegten Trockner bei 250 °C und bei 0,3 cm/s N$_2$ Fluß von HCl gereinigt. Hierbei werden die Nebenreaktionsprodukte und Abreinigungsprodukte der Reaktion zu 20% in die Belegung der Kieselsäure zurückgeführt. Erhalten wird ein hydrophobes weißes KIESELSÄURE-Pulver mit homogener Silyliermittelschicht.

Daten in Tabelle 1-1.

Beispiel 1-2

In einer kontinuierlichen Apparatur werden bei einer Temperatur von 105°C unter Inertgas $N_2$ zu einem Massestrom von 1000 g/h an hydrophiler KIESELSÄURE, mit einer Feuchte < 1% und einem HCl Gehalt < 100 ppm und mit einer spezifischen Oberfläche von 200 $m^2$/g (gemessen nach der BET Methode nach DIN 66131 und 66132) (erhältlich unter dem Namen WACKER HDK N20 bei Wacker-Chemie GmbH, Burghausen, D), 50 g/h VE-Wasser in feinstverteilter Form zugedüst, 150 g/h flüssiges MQ-Harz (mit einer Viskosität von 120 mPas bei 25°C und einem M:Q von 2,5:1), in flüssiger, feinstverteilter Form zugefügt durch Verdüsen über eine Einstoffdüse (Druck 15 bar), sowie durch Verdüsen über eine Einstoffdüse (Druck 5 bar), 150 g/h Dimethyldichlorsilan zugefügt. Die so beladene KIESELSÄURE wird bei einer Verweilzeit von 1,3 Stunden bei einer Temperatur von 105°C weiter mittels Rühren fluidisiert, und anschließend in einem darunter befindlichen Reaktor bei 350°C zur Reaktion gebracht. Anschließend wird in einem mechanisch bewegten Trockner bei 250°C und bei 0,3 cm/s $N_2$ Fluß von HCl gereinigt.

Hierbei werden die Nebenreaktionsprodukte und Abreinigungsprodukte der Reaktion zu 50% in die Belegung der Kieselsäure zurückgeführt. Erhalten wird ein hydrophobes weißes KIESELSÄURE-Pulver mit homogener Silyliermittelschicht.
Daten in Tabelle 1-1.

Beispiel 1-3

In einer kontinuierlichen Apparatur werden bei einer Temperatur von 25°C unter Inertgas $N_2$ zu einem Massestrom von 1000 g/h an hydrophiler KIESELSÄURE, mit einer Feuchte < 1% und einem HCl Gehalt < 100 ppm und mit einer spezifischen Oberfläche von 200 $m^2$/g (gemessen nach der BET Methode nach DIN 66131 und 66132) (erhältlich unter dem Namen WACKER HDK N20 bei Wacker-Chemie GmbH, Burghausen, D), 50 g/h VE-Wasser in feinstverteilter Form zugedüst, 150 g/h OH-endständiges PDMS (Viskosität: 40 mPas bei 25 °C), in flüssiger, feinstverteilter Form zugefügt durch Verdüsen über eine Einstoffdüse (Druck 10 bar), sowie durch Verdüsen über eine Einstoffdüse (Druck 5 bar), 50 g/h Hexamethyldisilazan zugefügt. Die so beladene KIESELSÄURE wird bei einer Verweilzeit von 2,5 Stunden bei einer Temperatur von 25°C weiter mittels Rühren fluidisiert, und anschließend in einem darunter befindlichen Reaktor bei 80°C zur Reaktion gebracht. Anschließend wird in einem mechanisch bewegten Trockner bei 140°C und bei 0,3 cm/s $N_2$ Fluß von $NH_3$ gereinigt. Hierbei werden die Nebenreaktionsprodukte und Abreinigungsprodukte der Reaktion zu 33% in die Belegung der Kieselsäure zurückgeführt. Erhalten wird ein hydrophobes weißes KIESELSÄURE-Pulver mit homogener Silyliermittelschicht.
Daten in Tabelle 1-1.

Beispiel 1-4

In einer kontinuierlichen Apparatur werden bei einer Temperatur von 25°C unter Inertgas $N_2$ zu einem Massestrom von 1000 g/h an hydrophiler KIESELSÄURE, mit einer Feuchte < 1% und einem HCl Gehalt < 100 ppm und mit einer spezifischen Oberfläche von 50 $m^2$/g (gemessen nach der BET Methode nach DIN 66131 und 66132) (erhältlich unter dem Namen WACKER HDK D05 bei Wacker-Chemie GmbH, Burghausen, D), 15 g/h VE-Wasser in feinstverteilter Form zugedüst, 40 g/h OH-endständiges PDMS (Viskosität: 40 mPas bei 25°C), in flüssiger, feinstverteilter Form zugefügt durch Verdüsen über eine Einstoffdüse (Druck 10 bar), sowie durch Verdüsen über eine Einstoffdüse (Druck 5 bar), 15 g/h Hexamethyldisilazan zugefügt. Die so beladene KIESELSÄURE wird bei einer Verweilzeit von 2,5 Stunden bei einer Temperatur von. 25°C weiter mittels Rühren fluidisiert, und anschließend in einem darunter befindlichen Reaktor bei 80°C zur Reaktion gebracht. Anschließend wird in einem mechanisch bewegten Trockner bei 140°C und bei 0,3 cm/s $N_2$ Fluß von $NH_3$ gereinigt. Hierbei werden die Nebenreaktionsprodukte und Abreinigungsprodukte der Reaktion zu 33% in die Belegung der Kieselsäure zurückgeführt. Erhalten wird ein hydrophobes weißes KIESELSÄURE-Pulver mit homogener Silyliermittelschicht.
Daten in Tabelle 1-1.

Tabelle 1-1

| | %C | %A | %SiOH | WT | MZ | DRIFT | MRZ | $\pi^*$ | IGC |
|---|---|---|---|---|---|---|---|---|---|
| B1 | 4,1 | 96 | 12 | nein | 50 | 0 | 4 | <1 | < 30 mJ/$m^2$ |
| B2 | 3,5 | 90 | 22 | nein | 55 | 0 | 5 | <1 | < 30 mJ/$m^2$ |
| B3 | 5,4 | 94 | 7 | nein | 70 | 0 | 5 | <1 | < 30 mJ/$m^2$ |

(fortgesetzt)

| | %C | %A | %SiOH | WT | MZ | DRIFT | MRZ | π* | IGC |
|---|---|---|---|---|---|---|---|---|---|
| B4 | 1,7 | 94 | 5 | nein | 70 | 0 | 5 | <1 | < 30 mJ/m$^2$ |

**Beschreibung der Analysenmethoden 1**

1. Kohlenstoffgehalt (%C)

- Elementaranalyse auf Kohlenstoff; Verbrennen der Probe bei >1000°C im $O_2$-Strom, Detektion und Quantifizierung des entstehenden $CO_2$ mit IR; Gerät LECO 244

2. Ausbeute der Reaktion (%A)

- berechnet aus dem erwarteten, theoretischen Kohlenstoffgehalt %C-theor und dem experimentell gefundenen Kohlenstoffgehalt %C-exp: %Ausbeute = %C-exp/%C-theor*100%

3. Restgehalt an nicht silylierten KIESELSÄURE-Silanolgruppen (%SiOH)
Methode: Säure-Base-Titration der in Wasser/Methanol = 50:50 supendierten Kieselsäure; Titration nach Sears (G.W. Sears, Anal. Chem., 28(12), (1956), 1981)

- Titration wird im pH-Bereich des isoelektrischen Punktes und unterhalb der Auflösung der Kieselsäure durchgeführt
- unbehandelte Kieselsäure mit 100% SiOH (KIESELSÄURE-Oberflächensilanolgruppen): SiOH-phil = 1,8 SiOH / nm$^2$
- silylierte Kieselsäure: SiOH-silyliert
- Kieselsäure-Rest-Silanolgehalt:

$$\texttt{\%SiOH = SiOH-silyliert / SiOH-phil * 100\%}$$

4. Test (ja/nein) der Benetzbarkeit mit Wasser (WT):

Einschütteln eines gleichen Volumens der Kieselsäure mit gleichem Volumen an Wasser;

- bei Benetzung (hydrophil) sinkt KIESELSÄURE ein: JA,
- bei Nicht-Benetzung (hydrophob) schwimmt KIESELSÄURE auf: NEIN,

5. Test (Volumen% MeOH in Wasser) der Benetzbarkeit mit Wasser-Methanol Gemischen = Methanolzahl (MZ): Einschütteln eines gleichen Volumens der Kieselsäure mit gleichem Volumen an Wasser-Methanol Gemisch

- Start mit 0% Methanol
- bei Nicht-Benetzung schwimmt KIESELSÄURE auf: Gemisch mit um 5 Vol.% höherem MeOH Gehalt verwenden
- bei Benetzung sinkt KIESELSÄURE ein: Anteil MeOH (%) in Wasser gibt MZ

6. Intensität der Bande der isolierten OH-Valenzschwingung bei 3750 cm$^{-1}$ gemessen mit der DRIFT (diffuse reflectance infrared fourier transformation spectroscopy)

- Bezogen auf die Intensität der Bande der unbehandelten Kieselsäure: %SiOH-37501/cm = int-silyl/int-phil*100%

7. Polarität, gemessen via Solvatochromie mit Methylrot in Toluol (MRZ)
- Lösung von 20 mg Methylrot in Toluol

- Suspendieren von 0,5 g Kieselsäure in 10 ml toluolischer Methylrotlösung; Visuelle Beurteilung der Farbe der Suspension:

| | | |
|---|---|---|
| ➢ Violett | 0 | unbehandelte Kieselsäure |
| ➢ Rot-Violett | 1 | |
| ➢ Rot | 2 | |
| ➢ Rot-Orange | 3 | |
| ➢ Orange | 4 | |
| ➢ Gelb-Orange | 5 | vollständig silylierte Kieselsäure, |

8. Dipolarität $\pi^*$, gemessen via Solvatochromie (mit Bis-Phenylen-di-Cyano-Eisen(II) in Dichlorethan): $\pi^* < 1{,}0$.

9. Homogenität der Struktur der Silyliermittelschicht an der Kieselsäure-Oberfläche gemessen mit Inverser Gaschromatographie (IGC)

Beispiel 1-5

Ladungsverhalten der KIESELSÄURE

Je 50 g eines Ferrit-Trägers mit einem mittleren Partikeldurchmesser von 80 $\mu$m werden mit je 0,5 g der KIESELSÄUREn aus den Beispielen 1-3 und 1-4 bei RT durch Schütteln in einem 100 ml PE-Gefäß während 15 Min vermischt. Vor der Messung werden diese Mischungen während 5 Minuten bei 64 UpM in einem geschlossenen 100 ml PE-Gefäß auf einem Rollenbock aktiviert. Mit einer "hard-blow-off cell" (ca. 3 g KIESELSÄURE, Kapazität 10 nF, 45 $\mu$m Sieb, Luftstrom 1 1/Min, Luftdruck 2,4 kPa, Meßzeit 90 sec) (EPPING GmbH, D-85375 Neufahrn) wird das triboelektrische Aufladungsverhalten der KIESELSÄURE gemessen als Verhältnis von KIESELSÄURE-Ladung pro KIESELSÄURE-Masse (q/m).

Tabelle 1-2

| Beispiel 1-5 | Ladungsverhalten q/m gegen Ferrit [$\mu$C/g] |
|---|---|
| Carrier + Beispiel 1-3 | - 530 |
| Carrier + Beispiel 1-4 | - 460 |

Beispiel 1-6

Fließ- und Ladungsverhalten von KIESELSÄURE-enthaltendem Toner

100 g eines KIESELSÄURE-freien magnetischen 1-Komponenten Trockentoners, Typ negativ ladend, "crushed type", Basis Copolymer Styrol/Methacrylat, mit einer mittleren Partikelgröße von 14 $\mu$m (z.B. erhältlich bei der Firma IMEX, Japan) werden mit 0,4 g einer KIESELSÄURE nach Beispielen 1-3 - 1-4 in einem Taumelmischer (z.B. Turbular) während 1 Stunde bei RT gemischt. Nach einer Belastungszeit des Toners von 20 Min (entsprechend der Belastung nach 1000 Kopiervorgängen) wird die Aufladung (Ladung pro Masse) des fertigen KIESELSÄURE-haltigen Toners und das Fließverhalten (Massenfluß) des fertigen KIESELSÄURE-haltigen Toners zur Entwicklungswalze in einem "q/m-Mono" Elektrometer/Flowtester (EPPING GmbH, D-85375 Neufahrn) bestimmt.

Tabelle 1-3

| Beispiel 1-6 | Tonerladung [$\mu$C/g] | Fließverhalten [mg] |
|---|---|---|
| KIESELSÄURE-freier Toner | - 1,50 | 2 |
| Toner + Beispiel 1-3 | - 2,01 | 46 |
| Toner + Beispiel 1-4 | - 1,93 | 48 |

Beispiel 1-7

Fließ- und Ladungsverhalten von KIESELSÄURE-enthaltendem Polymerisationstoner

100 g eines KIESELSÄURE-freien magnetischen 1-Komponenten Trockentoners, Typ negativ ladend, "chemically processed toner" hergestellt über Polymerisationsverfahren, Basis Copolymer Styrol/Methacrylat, mit einer mittleren Partikelgröße von 14 $\mu$m werden mit 0,4 g einer KIESELSÄURE nach Beispielen 1-3 - 1-4 in einem Taumelmischer (z.B. Turbular) während 1 Stunde bei RT gemischt. Nach einer Belastungszeit des Toners von 20 Min (entsprechend der Belastung nach 1000 Kopiervorgängen) wird die Aufladung (Ladung pro Masse) des fertigen KIESELSÄURE-haltigen Toners und das Fließverhalten (Massenfluß) des fertigen KIESELSÄURE-haltigen Toners zur Entwicklungswalze in einem "q/m-Mono" Elektrometer/Flowtester (EPPING GmbH, D-85375 Neufahrn) bestimmt.

Tabelle 1-4

| Beispiel 1-7 | Tonerladung [$\mu$C/g] | Fließverhalten [mg] |
|---|---|---|
| KIESELSÄURE-freier Toner | - 1,70 | 12 |
| Polymerisationstoner + Beispiel 1-3 | - 1,83 | 38 |
| Polymerisationstoner + Beispiel 1-4 | - 1,71 | 45 |

Beispiel 1-8

Fließ- und Ladungsverhalten von KIESELSÄURE-enthaltendem Toner

100 g eines KIESELSÄURE-freien Toners, compoundiert aus 88 g eines Binder-Harzes (Typ gemahlenes Fest-Harz negativ ladend), Basis Polyester (Cocondensat aus Phenyl-haltigem PPO und Phthalsäureanhydrid), mit einer mittleren Partikelgröße von 10 $\mu$m, 8 g eines Farbrußes (Cabot Regal 400R), 2 g eines negativ steuernden Ladungsregulativ (Aizen Spilon Black T-77, Hodogaya Chem.), und 2 g eines Wachses (Viscol TS-200, Sanyo Chem.), werden zu 1,5 g einer KIESELSÄURE nach Beispiel 1-3 in einem Taumelmischer (z.B. Turbular) während 1 Stunde bei RT zugemischt. Nach einer Belastungszeit des Toners von 20 Min (entsprechend der Belastung nach 1000 Kopiervorgängen) wird die Aufladung (Ladung pro Masse) des fertigen KIESELSÄURE-haltigen Toners und das Fließverhalten (Massenfluß) des fertigen KIESELSÄURE-haltigen Toners zur Entwicklungswalze in einem "q/m-Mono" Elektrometer/Flowtester (EPPING GmbH, D-85375 Neufahrn) bestimmt.

Tabelle 1-5

| | Tonerladung [$\mu$C/g] | Fließverhalten [mg] |
|---|---|---|
| KIESELSÄURE-freier Toner | - 1,80 | 14 |
| Beispiel 1-8 | - 2,05 | 37 |

Beispiel 1-9

Fließ- und Ladungsverhalten von KIESELSÄURE-enthaltendem Toner

98 g eines KIESELSÄURE-freien Toners, compoundiert aus 90 g eines Binder-Harzes (Typ gemahlenes Fest-Harz negativ ladend), Basis Polyester (Cocondensat aus Phenyl-haltigem PPO und Phthalsäureanhydrid), mit einer mittleren Partikelgröße von 10 $\mu$m, 5 g eines Farbrußes (Mitsubishi Carbon Black N° 44), 1 g eines positiv steuernden Ladungsregulativ (Bontron S-34, Orient Chem.), und 2 g eines Wachses (Viscol 550P, Sanyo Chem.), werden zu 1,5 g einer KIESELSÄURE nach Beispiel 1-3 in einem Taumelmischer (z.B. Turbular) während 1 Stunde bei RT zugemischt. Nach einer Belastungszeit des Toners von 20 Min (entsprechend der Belastung nach 1000 Kopiervorgängen) wird die Aufladung (Ladung pro Masse) des fertigen KIESELSÄURE-haltigen Toners und das Fließverhalten (Massenfluß) des fertigen KIESELSÄURE-haltigen Toners zur Entwicklungswalze in einem "q/m-Mono" Elektrometer/Flowtester (EPPING GmbH, D-85375 Neufahrn) bestimmt.

Tabelle 1-6

|  | Tonerladung [$\mu$C/g] | Fließverhalten [mg] |
|---|---|---|
| KIESELSÄURE-freier Toner | + 1,80 | 7 |
| Beispiel 1-9 | +0,25 | 27 |

Herstellung der silanolgruppenarmen Kieselsäure (2) mit homogener Verteilung von polaren Gruppen in der Oberfläche

Beispiel 2-1

In einer kontinuierlichen Apparatur werden bei einer Temperatur von 35°C unter Inertgas $N_2$ zu einem Massestrom von 1000 g/h an hydrophiler KIESELSÄURE mit einer spezifischen Oberfläche von 200 $m^2$/g (gemessen nach der BET Methode nach DIN 66131 und 66132) (erhältlich unter dem Namen WACKER HDK N20 bei Wacker-Chemie GmbH, Burghausen, D), 50 g/h vollentsalztes Wasser (VE-Wasser) in feinstverteilter Form zugedüst, 100 g/h OH-endständiges Polydimethylsiloxan (PDMS) (Viskosität: 40 mPas bei 25 °C), in flüssiger, feinstverteilter Form zugefügt durch Verdüsen über eine Einstoffdüse (Druck 10 bar), sowie durch Verdüsen über eine Einstoffdüse (Druck 7 bar) 150 g/h eines frisch hergestellten Gemisches 1:2 von 3-Aminoethyl-Aminopropyl-trimethoxy Silan (Wacker GF91 Silan) und Wasser zugefügt. Die so beladene KIESELSÄURE wird bei einer Verweilzeit von 2 Stunden bei einer Temperatur von 35 °C weiter mittels Rühren fluidisiert, und anschließend in einem darunter befindlichen Reaktor bei 80°C zur Reaktion gebracht. Anschließend wird in einem mechanisch bewegten Trockner bei 120 °C und bei 0,1 cm/s $N_2$ Fluß von Flüchtigen gereinigt. Hierbei werden die Nebenreaktionsprodukte und Abreinigungsprodukte der Reaktion zu 33% in die Belegung der Kieselsäure zurückgeführt.
Erhalten wird ein hydrophobes weißes KIESELSÄURE-Pulver mit homogener Verteilung von polaren und unpolaren Gruppen in der Silyliermittelschicht.
Daten in Tabelle 2-1.

Beispiel 2-2

In einer kontinuierlichen Apparatur werden bei einer Temperatur von 35 °C unter Inertgas $N_2$ zu einem Massestrom von 1000 g/h an hydrophiler KIESELSÄURE mit einer spezifischen Oberfläche von 200 $m^2$/g (gemessen nach der BET Methode nach DIN 66131 und 66132) (erhältlich unter dem Namen WACKER HDK N20 bei Wacker-Chemie GmbH, Burghausen, D), 50 g/h VE-Wasser in feinstverteilter Form zugedüst, 100 g/h OH-endständiges PDMS (Viskosität: 40 mPas bei 25 °C), in flüssiger, feinstverteilter Form zugefügt durch Verdüsen über eine Einstoffdüse (Druck 10 bar), sowie durch Verdüsen über eine Einstoffdüse (Druck 7 bar) 150 g/h eines frisch hergestellten Gemisches 1:2 von N,N'-Diethyl-3-aminopropyl-methyl-dimethoxy Silan und Methanol zugefügt. Die so beladene KIESELSÄURE wird bei einer Verweilzeit von 2 Stunden bei einer Temperatur von 35°C weiter mittels Rühren fluidisiert, und anschließend in einem darunter befindlichen Reaktor bei 80°C zur Reaktion gebracht. Anschließend wird in einem mechanisch bewegten Trockner bei 120 °C und bei 0,1 cm/s $N_2$ Fluß von Flüchtigen gereinigt. Hierbei werden die Nebenreaktionsprodukte und Abreinigungsprodukte der Reaktion zu 33% in die Belegung der Kieselsäure zurückgeführt. Erhalten wird ein hydrophobes weißes KIESELSÄURE-Pulver mit homogener Verteilung von polaren und unpolaren Gruppen in der Silyliermittelschicht.
Daten in Tabelle 2-1.

Beispiel 2-3

In einer kontinuierlichen Apparatur werden bei einer Temperatur von 35°C unter Inertgas $N_2$ zu einem Massestrom von 1000 g/h an hydrophiler KIESELSÄURE mit einer spezifischen Oberfläche von 200 $m^2$/g (gemessen nach der BET Methode nach DIN 66131 und 66132) (erhältlich unter dem Namen WACKER HDK N20 bei Wacker-Chemie GmbH, Burghausen, D), 50 g/h VE-Wasser in feinstverteilter Form zugedüst, 100 g/h OH-endständiges PDMS (Viskosität: 40 mPas bei 25 °C), in flüssiger, feinstverteilter Form zugefügt durch Verdüsen über eine Einstoffdüse (Druck 10 bar), sowie durch Verdüsen über eine Einstoffdüse (Druck 7 bar) 150 g/h eines Gemisches 1:2 N,N'Bis-trimethoxysilylpropyl-Ethylendiamin und Methanol zugefügt. Die so beladene KIESELSÄURE wird bei einer Verweilzeit von 2 Stunden bei einer Temperatur von 35°C weiter mittels Rühren fluidisiert, und anschließend in einem darunter befindlichen Reaktor bei 80 C zur Reaktion gebracht. Anschließend wird in einem mechanisch bewegten Trockner bei 120°C und bei 0,1 cm/s $N_2$ Fluß von Flüchtigen gereinigt. Hierbei werden die Nebenreaktionsprodukte und Abreinigungsprodukte der Reaktion zu 33% in die Belegung der Kieselsäure zurückgeführt. Erhalten wird ein hydrophobes weißes KIESELSÄURE-Pulver mit homogener Verteilung von polaren und unpolaren Gruppen in der Silyliermittelschicht.

Daten in Tabelle 2-1.

Beispiel 2-4

In einer kontinuierlichen Apparatur werden bei einer Temperatur von 35°C unter Inertgas $N_2$ zu einem Massestrom von 1000 g/h an hydrophiler KIESELSÄURE mit einer spezifischen Oberfläche von 200 $m^2$/g (gemessen nach der BET Methode nach DIN 66131 und 66132) (erhältlich unter dem Namen WACKER HDK N20 bei Wacker-Chemie GmbH, Burghausen, D), 50 g/h VE-Wasser in feinstverteilter Form zugedüst, 100 g/h OH-endständiges PDMS (Viskosität: 40 mPas bei 25 °C), in flüssiger, feinstverteilter Form zugefügt durch Verdüsen über eine Einstoffdüse (Druck 10 bar), sowie durch Verdüsen über eine Einstoffdüse (Druck 7 bar) 150 g/h eines frisch hergestellten Gemisches 1:2 von 3-Methacryloxy-propyl-triethoxysilan (Wacker GF31 Silan) und Methanol zugefügt. Die so beladene KIESELSÄURE wird bei einer Verweilzeit von 2 Stunden bei einer Temperatur von 35°C weiter mittels Rühren fluidisiert, und anschließend in einem darunter befindlichen Reaktor bei 80°C zur Reaktion gebracht. Anschließend wird in einem mechanisch bewegten Trockner bei 120 °C und bei 0,1 cm/s der $N_2$ Fluß vom. Flüchtigen gereinigt. Hierbei werden die Nebenreaktionsprodukte und Abreinigungsprodukte der Reaktion zu 33% in die Belegung der Kieselsäure zurückgeführt. Erhalten wird ein hydrophobes weißes KIESELSÄURE-Pulver mit homogener Verteilung von polaren und unpolaren Gruppen in der Silyliermittelschicht.
Daten in Tabelle 2-1.

Beispiel 2-5

In einer kontinuierlichen Apparatur werden bei einer Temperatur von 35°C unter Inertgas $N_2$ zu einem Massestrom von 1000 g/h an hydrophiler KIESELSÄURE mit einer spezifischen Oberfläche von 200 $m^2$/g (gemessen nach der BET Methode nach DIN 66131 und 66132) (erhältlich unter dem Namen WACKER HDK N20 bei Wacker-Chemie GmbH, Burghausen, D), 50 g/h VE-Wasser in feinstverteilter Form zugedüst, 100 g/h OH-endständiges PDMS (Viskosität: 40 mPas bei 25 °C), in flüssiger, feinstverteilter Form zugefügt durch Verdüsen über eine Einstoffdüse (Druck 10 bar), sowie durch Verdüsen über eine Einstoffdüse (Druck 7 bar) 150 g/h eines frisch hergestellten Gemisches 1:2 von 3-Glycidoxy-propyl-triethoxysilan (Wacker GF82 Silan) und Methanol zugefügt. Die so beladene KIESELSÄURE wird bei einer Verweilzeit von 2 Stunden bei einer Temperatur von 35°C weiter mittels Rühren fluidisiert, und anschließend in einem darunter befindlichen Reaktor bei 80°C zur Reaktion gebracht. Anschließend wird in einem mechanisch bewegten Trockner bei 120 °C und bei 0,1 cm/s der $N_2$ Fluß vom Flüchtigen gereinigt. Hierbei werden die Nebenreaktionsprodukte und Abreinigungsprodukte der Reaktion zu 33% in die Belegung der Kieselsäure zurückgeführt. Erhalten wird ein hydrophobes weißes KIESELSÄURE-Pulver mit homogener Verteilung von polaren und unpolaren Gruppen in der Silyliermittelschicht.
Daten in Tabelle 2-1.

Beispiel 2-6

In einer kontinuierlichen Apparatur werden bei einer Temperatur von 35°C unter Inertgas $N_2$ zu einem Massestrom von 1000 g/h an hydrophiler KIESELSÄURE mit einer spezifischen Oberfläche von 200 $m^2$/g (gemessen nach der BET Methode nach DIN 66131 und 66132) (erhältlich unter dem Namen WACKER HDK N20 bei Wacker-Chemie GmbH, Burghausen, D), 50 g/h VE-Wasser in feinstverteilter Form zugedüst, 100 g/h OH-endständiges PDMS (Viskosität: 40 mPas bei 25 °C), in flüssiger, feinstverteilter Form zugefügt durch Verdüsen über eine Einstoffdüse (Druck 10 bar), sowie durch Verdüsen über eine Einstoffdüse (Druck 7 bar) 150 g/h eines Gemisches 1:2 von Phosphinato-Bis [ethyldimethylsiloxyethyldimethyltrimethoxysilan] Natrium Salz und Wasser zugefügt. Die so beladene KIESELSÄURE wird bei einer Verweilzeit von 2 Stunden bei einer Temperatur von 35 °C weiter mittels Rühren fluidisiert, und anschließend in einem darunter befindlichen Reaktor bei 80°C zur Reaktion gebracht. Anschließend wird in einem mechanisch bewegten Trockner bei 120 °C und bei 0,1 cm/s der $N_2$ Fluß von Flüchtigen gereinigt. Hierbei werden die Nebenreaktionsprodukte und Abreinigungsprodukte der Reaktion zu 33% in die Belegung der Kieselsäure zurückgeführt. Erhalten wird ein hydrophobes weißes KIESELSÄURE-Pulver mit homogener Verteilung von polaren und unpolaren Gruppen in der Silyliermittelschicht. Daten in Tabelle 2-1.

Beispiel 2-7

In einer kontinuierlichen Apparatur werden bei einer Temperatur von 35°C unter Inertgas $N_2$ zu einem Massestrom von 1000 g/h an hydrophiler KIESELSÄURE mit einer spezifischen Oberfläche von 200 $m^2$/g (gemessen nach der BET Methode nach DIN 66131 und 66132) (erhältlich unter dem Namen WACKER HDK N20 bei Wacker-Chemie GmbH, Burghausen, D), 50 g/h VE-Wasser in feinstverteilter Form zugedüst, 100 g/h OH-endständiges PDMS (Viskosität:

40 mPas bei 25 °C), in flüssiger, feinstverteilter Form zugefügt durch Verdüsen über eine Einstoffdüse (Druck 10 bar), sowie durch Verdüsen über eine Einstoffdüse (Druck 7 bar) 150 g/h eines Gemisches 1:2 eines Hydroxy-endständiges Polyethylenoxid-propyl-polydimethylsiloxans von einer Viskosität von 100 mPas bei 25°C (erhältlich bei Wacker unter dem Namen IM22) und Wasser zugefügt. Die so beladene KIESELSÄURE wird bei einer Verweilzeit von 2 Stunden bei einer Temperatur von 35°C weiter mittels Rühren fluidisiert, und anschließend in einem darunter befindlichen Reaktor bei 80°C zur Reaktion gebracht. Anschließend wird in einem mechanisch bewegten Trockner bei 120°C und bei 0,1 cm/s $N_2$ Fluß vom Flüchtigen gereinigt. Hierbei werden die Nebenreaktionsprodukte und Abreinigungsprodukte der Reaktion zu 33% in die Belegung der Kieselsäure zurückgeführt. Erhalten wird ein hydrophobes weißes KIESELSÄURE-Pulver mit homogener Verteilung von polaren und unpolaren Gruppen in der Silyliermittelschicht.
Daten in Tabelle 2-1.

Beispiel 2-8

In einer kontinuierlichen Apparatur werden bei einer Temperatur von 35°C unter Inertgas $N_2$ zu einem Massestrom von 1000 g/h an hydrophiler KIESELSÄURE mit einer spezifischen Oberfläche von 200 $m^2/g$ (gemessen nach der BET Methode nach DIN 66131 und 66132) (erhältlich unter dem Namen WACKER HDK N20 bei Wacker-Chemie GmbH, Burghausen, D), 50 g/h VE-Wasser in feinstverteilter Form zugedüst, 100 g/h OH-endständiges PDMS (Viskosität: 40 mPas bei 25 °C), in flüssiger, feinstverteilter Form zugefügt durch Verdüsen über eine Einstoffdüse (Druck 10 bar), sowie durch Verdüsen über eine Einstoffdüse (Druck 7 bar) 150 g/h eines frisch hergestellten Gemisches 1:2 eines 3-Mercapto-propyl-trimethoxysilans (erhältlich bei Wacker unter dem Namen GF70) und Ethanol zugefügt. Die so beladene KIESELSÄURE wird bei einer Verweilzeit von 2 Stunden bei einer Temperatur von 35°C weiter mittels Rühren fluidisiert, und anschließend in einem darunter befindlichen Reaktor bei 80°C zur Reaktion gebracht. Anschließend wird in einem mechanisch bewegten Trockner bei 120°C und bei 0,1 cm/s der $N_2$ Fluß vom Flüchtigen gereinigt. Hierbei werden die Nebenreaktionsprodukte und Abreinigungsprodukte der Reaktion zu 33% in die Belegung der Kieselsäure zurückgeführt. Erhalten wird ein hydrophobes weißes KIESELSÄURE-Pulver mit homogener Verteilung von polaren und unpolaren Gruppen in der Silyliermittelschicht.
Daten in Tabelle 2-1.

Beispiel 2-9

In einer kontinuierlichen Apparatur werden bei einer Temperatur von 35°C unter Inertgas $N_2$ zu einem Massestrom von 1000 g/h an hydrophiler KIESELSÄURE mit einer spezifischen Oberfläche von 200 $m^2/g$ (gemessen nach der BET Methode nach DIN 66131 und 66132) (erhältlich unter dem Namen WACKER HDK N20 bei Wacker-Chemie GmbH, Burghausen, D), 50 g/h VE-Wasser in feinstverteilter Form zugedüst, 100 g/h OH-endständiges PDMS (Viskosität: 40 mPas bei 25 °C), in flüssiger, feinstverteilter Form zugefügt durch Verdüsen über eine Einstoffdüse (Druck 10 bar), sowie durch Verdüsen über eine Einstoffdüse (Druck 7 bar) 150 g/h eines frisch hergestellten Gemisches 1:2 eines 3-Cyclohexylamino-propyl-trimethoxysilans (erhältlich bei Wacker unter dem Namen GF92) und Ethanol zugefügt. Die so beladene KIESELSÄURE wird bei einer Verweilzeit von 2 Stunden bei einer Temperatur von 35°C weiter mittels Rühren fluidisiert, und anschließend in einem darunter befindlichen Reaktor bei 80 °C zur Reaktion gebracht. Anschließend wird in einem mechanisch bewegten Trockner bei 120°C und bei 0,1 cm/s der $N_2$ Fluß von Flüchtigen gereinigt. Hierbei werden die Nebenreaktionsprodukte und Abreinigungsprodukte der Reaktion zu 33% in die Belegung der Kieselsäure zurückgeführt. Erhalten wird ein hydrophobes weißes KIESELSÄURE-Pulver mit homogener Verteilung von polaren und unpolaren Gruppen in der Silyliermittelschicht.
Daten in Tabelle 2-1.

Beispiel 2-10

In einer kontinuierlichen Apparatur werden bei einer Temperatur von 35°C unter Inertgas $N_2$ zu einem Massestrom von 1000 g/h an hydrophiler KIESELSÄURE mit einer spezifischen Oberfläche von 200 $m^2/g$ (gemessen nach der BET Methode nach DIN 66131 und 66132) (erhältlich unter dem Namen WACKER HDK N20 bei Wacker-Chemie GmbH, Burghausen, D), 100 g/h OH-endständiges PDMS (Viskosität: 40 mPas bei 25°C), in flüssiger, feinstverteilter Form zugefügt durch Verdüsen über eine Einstoffdüse (Druck 10 bar), sowie durch Verdüsen über eine Einstoffdüse (Druck 7 bar) 50 g/h eines Poly-hydrogenmethyl-siloxans zugefügt. Die so beladene KIESELSÄURE wird bei einer Verweilzeit von 2 Stunden bei einer Temperatur von 35°C weiter mittels Rühren fluidisiert, und anschließend in einem darunter befindlichen Reaktor bei 80°C zur Reaktion gebracht. Anschließend wird in einem mechanisch bewegten Trockner bei 120°C und bei 0,1 cm/s der $N_2$ Fluß von Flüchtigen gereinigt. Hierbei werden die Nebenreaktionsprodukte und Abreinigungsprodukte der Reaktion zu 33% in die Belegung der Kieselsäure zurückgeführt. Erhalten wird ein hydrophobes weißes KIESELSÄURE-Pulver mit homogener und definierter Verteilung von polaren und unpolaren Gruppen in der Silyliermittelschicht.
Daten in Tabelle 2-1.

Tabelle 2-1

| Beispiel | %A | %SiOH |
|----------|-----|-------|
| 2-1 | 93 | 2 |
| 2-2 | 92 | 3 |
| 2-3 | 95 | 3 |
| 2-4 | 94 | 7 |
| 2-5 | 92 | 8 |
| 2-6 | 96 | 1 |
| 2-7 | 90 | 12 |
| 2-8 | 94 | 13 |
| 2-9 | 94 | 6 |
| 2-10 | 89 | n.a. |

Beschreibung der Analysenmethoden 2

2-1. Ausbeute der Reaktion (%A)

- berechnet aus dem erwarteten, theoretischen Kohlenstoffgehalt %C-theor und dem experimentell gefundenen Kohlenstoffgehalt %C-exp: %Ausbeute = %C-exp/%C-theor*100%

2-2. Restgehalt an nicht silylierten KIESELSÄURE-Silanolgruppen (%SiOH)

Methode: Säure-Base-Titration der in Wasser/Methanol = 50:50 suspendierten Kieselsäure; Titration nach Sears (G.W. Sears, Anal. Chem., 28(12), (1956), 1981)

- Titration wird im pH-Bereich des isoelektrischen Punktes und unterhalb der Auflösung der Kieselsäure durchgeführt
- unbehandelte Kieselsäure mit 100% SiOH (KIESELSÄURE-Oberflächensilanolgruppen): SiOH-phil = 1,8 SiOH / nm$^2$
- silylierte Kieselsäure: SiOH-silyliert
- Kieselsäure-Rest-Silanolgehalt:

$$\texttt{\%SiOH = SiOH-silyliert / SiOH-phil * 100\%}$$

Beispiel 2-11

Ladungsverhalten der KIESELSÄURE

Je 50 g eines Ferrit Carriers mit einem mittleren Partikeldurchmesser von 80 $\mu$m werden mit je 0,5 g der KIESELSÄUREn aus den Beispielen 2-1 - 2-4 bei Raumtemperatur (RT) durch Schütteln in einem 100 ml PE-Gefäß während 15 Min vermischt. Vor der Messung werden diese Mischungen während 5 Minuten bei 64 UpM in einem geschlossenen 100 ml PE-Gefäß auf einem Rollenbock aktiviert. Mit einer "hard-blow-off cell" (ca. 3 g KIESELSÄURE, Kapazität 10 nF, 45 $\mu$m Sieb, Luftstrom 1 l/Min, Luftdruck 2,4 kPa, Meßzeit 90 sec) (EPPING GmbH, D-85375 Neufahrn) wird das triboelektrische Aufladungsverhalten der KIESELSÄURE gemessen als Verhältnis von KIESELSÄURE-Ladung pro KIESELSÄURE-Masse (q/m).

Tabelle 2-2

|  | Ladungsverhalten q/m gegen Ferrit [$\mu$C/g] |
|---|---|
| Carrier + Beispiel 2-1 | - 10 |
| Carrier + Beispiel 2-2 | + 10 |
| Carrier + Beispiel 2-3 | + 20 |
| Carrier + Beispiel 2-4 | - 460 |

Beispiel 2-12

Fließ- und Ladungsverhalten von KIESELSÄURE-enthaltendem Toner

100 g eines KIESELSÄURE-freien magnetischen 1-Komponenten Trockentoners, Typ negativ ladend, "crushed type", Basis Copolymer Styrol/Methacrylat, mit einer mittleren Partikelgröße von 14 $\mu$m (z.B. erhältlich bei der Firma IMEX, Japan) werden mit 0,4 g einer KIESELSÄURE nach Beispiel 2-6 in einem Taumelmischer (z.B. Turbular) während 1 Stunde bei RT gemischt. Nach einer Belastungszeit des Toners von 20 Min (entsprechend der Belastung nach 1000 Kopiervorgängen) wird die Aufladung (Ladung pro Masse) des fertigen KIESELSÄURE-haltigen Toners und das Fließverhalten (Massenfluß) des fertigen KIESELSÄURE-haltigen Toners zur Entwicklungswalze in einem "q/m-Mono" Elektrometer/Flowtester (EPPING GmbH, D-85375 Neufahrn) bestimmt.

Tabelle 2-3

|  | Tonerladung [$\mu$C/g] | Fließverhalten [mg] |
|---|---|---|
| KIESELSÄURE-freier Toner | - 1,60 | 14 |
| Beispiel 2-12 | - 1,99 | 37 |

Beispiel 2-13

Fließ- und Ladungsverhalten von KIESELSÄURE-enthaltendem Toner

100 g eines KIESELSÄURE-freien Toners, compoundiert aus 88 g eines Binder-Harzes (Typ gemahlenes Fest-Harz negativ ladend), Basis Polyester (Cocondensat aus Phenyl-haltigem PPO und Phthalsäureanhydrid), mit einer mittleren Partikelgröße von 10 $\mu$m, 8 g eines Farbrußes (Cabot Regal 400R), 2 g eines negativ steuernden Ladungsregulativs (Aizen Spilon Black T-77, Hodogaya Chem.), und 2 g eines Wachses (Viscol TS-200 Sanyo Chem.), werden zu 1,5 g einer KIESELSÄURE nach Beispiel 2-3 in einem Taumelmischer (z.B. Turbular) während 1 Stunde bei RT zugemischt. Nach einer Belastungszeit des Toners von 20 Min (entsprechend der Belastung nach 1000 Kopiervorgängen) wird die Aufladung (Ladung pro Masse) des fertigen KIESELSÄURE-haltigen Toners und das Fließverhalten (Massenfluß) des fertigen KIESELSÄURE-haltigen Toners zur Entwicklungswalze in einem "q/m-Mono" Elektrometer/Flowtester (EPPING GmbH, D-85375 Neufahrn) bestimmt.

Tabelle 2-4

|  | Tonerladung [$\mu$C/g] | Fließverhalten [mg] |
|---|---|---|
| KIESELSÄURE-freier Toner | - 1,50 | 2 |
| Toner + Beispiel 2-3 | - 1,05 | 42 |

**Patentansprüche**

1.  Verfahren zur Herstellung silylierter Kieselsäure mit homogener Silyliermittelschicht oder mit homogen verteiltem Anteil an polaren Gruppen in der Silyliermittelschicht, wobei der Herstellungsprozess in 3 aufeinanderfolgenden getrennten Schritten erfolgt, die jeweils in einem eigenen Gefäß erfolgen: (1) Beladung der hydrophilen Ausgangskieselsäure mit Silyliermittel (2) Reaktion der hydrophilen Kieselsäure mit dem Silyliermittel und (3) Reinigung der hydrophilen Kieselsäure von Silyliermittel und Nebenreaktioneprodukten.

**2.** Verfahren zur Herstellung der silylierten Kieselsäure nach Anspruch 1, **dadurch gekennzeichnet, dass** bei der Herstellung der hydrophilen Ausgangskieselsäure nicht mehr als 10 Gew.% Wasser bezogen auf das gesamte Gewicht der Ausgangskieselsäure zugegeben wird.

**3.** Verfahren zur Herstellung silylierter Kieselsäure nach Anspruch 1 oder 2, **dadurch gekennzeichnet, dass** der Transport der Kieselsäure von Schritt (1) nach Schritt (2) und-Schritt (3) mittels der Schwerkraft erfolgt.

**4.** Verfahren zur Herstellung der silylierten Kieselsäure nach einem oder mehreren der Ansprüche 1 bis 3, **dadurch gekennzeichnet, dass** die Reaktionsnebenprodukte und Abreinigungprodukte der Silylierreaktion aus Schritt (3) zurück in den Schritt (1) der Belegung geführt werden.

**5.** Verfahren zur Herstellung der silylierten Kieselsäure nach einem oder mehreren der Ansprüche 1 bis 4, **dadurch gekennzeichnet, dass** das oder die Silyliermittel der Kieselsäure in flüssiger Form als feinstverteiltes Aerosol zugefügt werden.

**6.** Verfahren zur Herstellung der silylierten Kieselsäure nach einem oder mehreren der Ansprüche 1 bis 5, **dadurch gekennzeichnet, dass** während oder nach dem Silylierschritt Verfahren zur mechanischen Verdichtung eingesetzt werden.

**7.** Verfahren zur Herstellung der silylierten Kieselsäure nach einem oder mehreren der Ansprüche 1 bis 6, **dadurch gekennzeichnet, dass** nach dem Silylierschritt Verfahren zur Desagglomerierung der Kieselsäure eingesetzt werden.

**8.** Verfahren zur Herstellung einer Kieselsäure nach einem oder mehreren der Ansprüche 1 bis 7 **dadurch gekennzeichnet, dass** die Kieselsäure mit einem

I) Silyliermittel mit unpolaren Gruppen

I a) Organosilan der Formel

$$R^1{}_n SiX_{4-n}$$

wobei n = 1, 2 oder 3 ist
oder Mischungen aus diesen Organosilanen,
wobei $R^1$ ein einfach oder mehrfach ungesättigter, einwertiger, gegebenenfalls halogenierter, Kohlenwasserstoffrest mit 1 bis 18 C-Atomen ist und dabei gleich oder verschieden sein kann und X = Halogen, Stickstoffrest, $OR^2$, $OCOR^2$, $O(CH_2)_x OR^2$ bedeutet,
wobei $R^2$ Wasserstoff oder ein einwertiger Kohlenwasserstoffrest mit 1 bis 12 C-Atomen bedeutet
und x = 1, 2, 3 bedeutet
und / oder
I b) Organosiloxan aufgebaut aus Einheiten der Formel

$$(R^1{}_3 SiO_{1/2}),$$

und/oder

$$(R^1{}_2 SiO_{2/2}),$$

und/oder

$$(R^1 SiO_{3/2})$$

wobei $R^1$ die obige Bedeutung hat, wobei
die Anzahl von diesen Einheiten in einem Organosiloxan mindestens 2 ist,
silyliert wird und Ia und Ib allein oder in beliebigen Gemischen eingesetzt werden können.

**9.** Verfahren zur Herstellung einer Kieselsäure nach Anspruch 8 **dadurch gekennzeichnet, dass** mindestens zwei verschiedene Silyliermittel eingesetzt werden, mit der Maßgabe, dass mindestens ein Silyliermittel eine Viskosität von kleiner als 2 mPas bei 25 °C und mindestens ein Silyliermittel eine Viskosität von größer als 5 mPas bei 25 °C aufweist.

**10.** Verfahren zur Herstellung einer Kieselsäure nach einem oder mehreren der Ansprüche 1 bis 7, **dadurch gekennzeichnet, dass** die Kieselsäure mit einem

I) Silyliermittel mit unpolaren Gruppen

I a) Organosilan der Formel

$$R^1{}_n SiX_{4-n}$$

wobei n = 1, 2 oder 3 ist
oder Mischungen aus diesen Organosilanen,
wobei $R^1$ ein einfach oder mehrfach ungesättigter, einwertiger, gegebenenfalls halogenierter, Kohlenwasserstoffrest mit 1 bis 18 C-Atomen ist und dabei gleich oder verschieden sein kann und X = Halogen, Stickstoffrest, $OR^2$, $OCOR^2$, $O(CH_2)_xOR^2$ bedeutet,
wobei $R^2$ Wasserstoff oder ein einwertiger Kohlenwasserstoffrest mit 1 bis 12 C-Atomen bedeutet
und x = 1, 2, 3 bedeutet
und / oder
I b) Organosiloxan aufgebaut aus Einheiten der Formel

$$(R^1{}_3 SiO_{1/2}),$$

und/oder

$$(R^1{}_2 SiO_{2/2}),$$

und/oder

$$(R^1 SiO_{3/2})$$

wobei $R^1$ die obige Bedeutung hat, wobei
die Anzahl von diesen Einheiten in einem Organosiloxan mindestens 2 ist,
silyliert wird und Ia und Ib allein oder in beliebigen Gemischen eingesetzt werden können
und / oder mit

II) Silyliermittel mit polaren Gruppen

II a) Organosilane der Formel

$$R^3{}_m R^1{}_n SiX1,$$

wobei m + n + 1 = 4
n = 0, 1 oder 2
und m = 1, 2, oder 3 ist,
wobei $R^3$ ein Wasserstoff oder ein einwertiger oder zweiwertiger, ein oder mehrere, gleiche oder verschiedene, Heteroatome Y enthaltender Kohlenwasserstoffrest mit 1 bis 12 C-Atomen ist, falls es sich um einen zweiwertigen Kohlenwasserstoffrest handelt, so kann dieser an 2 Si-Atome gebunden sein, bzw. in einem Organo-Silan der Struktur $X_{4-n-m}R^1{}_n SiR^3{}_m SiR^1{}_n X_{4-n-m}$ gebunden sein,
wobei das Heteroatom Y ein Element der 3., 4. (nicht C), 5. und 6. Hauptgruppe im Periodensystem der Elemente ist, wobei Y gleich N, P, O und S bevorzugt ist,
und / oder ein
II b) Organosiloxan aufgebaut aus einer oder mehreren, gleichen oder verschiedenen Einheiten der Formel

$$R^3{}_q R^1{}_r SiO_{(4-q-r)/2},$$

wobei
q = 1, 2 oder 3
r = 0, 1 oder 2
und q + r < 4 ist,

wobei R$^1$ und R$^3$ die obige Bedeutung haben, wobei die Anzahl von diesen Einheiten in einem Organosiloxan mindestens 2 beträgt, silyliert wird und IIa und IIb allein oder in beliebigen Gemischen mit Ia und Ib eingesetzt werden können, mit der Maßgabe dass, Silyliermittel (II) mit polaren Gruppen zumindest 1 - 80 Gew.% der Gesamtmenge an Silyliermittel (I) und (II) beträgt.

11. Verfahren zur Herstellung einer Kieselsäure nach Anspruch 10, **dadurch gekennzeichnet, dass** ein (I) Silyliermittel mit unpolaren Gruppen zumindest 20 Gew.% der Gesamtmenge an Silyliermittel beträgt.

12. Kieselsäure mit geringem Gehalt an Silanolgruppen herstellbar nach einem oder mehreren der Ansprüche 1 bis 9 mit einer mittleren Primärteilchen-Partikelgröße kleiner als 100 nm, wobei diese Primärteilchen nicht isoliert in der Kieselsäure existieren, sondern Bestandteile größerer Aggregate (Definition nach DIN 53206) sind, die einen Durchmessern von 100 bis 1000 nm aufweisen und Agglomerate (Definition nach DIN 53206) aufbauen, die in Abhängigkeit von der äußeren Scherbelastung Größen von 1 bis 500 μm aufweisen, wobei die Kieselsäure eine spezifischen Oberfläche von 10 bis 300 m$^2$/g (gemessen nach der BET Methode nach DIN 66131 und 66132) aufweist, wobei die Kieselsäure eine fraktale Dimension der Masse D$_m$ von kleiner oder gleich als 2,8, und eine Dichte an Oberflächen-Silanolgruppen SiOH von kleiner als 0,6 SiOH/nm$^2$, und pro 100 m$^2$/g spezifischer Oberfläche (gemessen nach der BET Methode nach DIN 66131 und 66132) einen Kohlenstoffgehalt von mindestens 1,0 Gew.-% aufweist.

13. Kieselsäure nach Anspruch 12, **dadurch gekennzeichnet, dass** sie einen homogen verteilten Anteil an polaren Gruppen in der Silyliermittelschicht der Kieselsäureoberfläche mit einer mittleren Primärteilchen-Partikelgröße kleiner als 100 nm aufweist.

14. Toner, Entwickler, Ladungssteuerungshilfsmittel und / oder Fließhilfsmittel für pulverförmige Systeme, **dadurch gekennzeichnet, dass** er eine Kieselsäure nach Anspruch 12 oder 13 oder herstellbar nach einem der Ansprüche 1 bis 9 oder 10 und 11 enthält.

15. Vernetzbare Polymer- und / oder Harzmasse, **dadurch gekennzeichnet, dass** sie eine Kieselsäure nach Anspruch 12 oder 13 oder herstellbar nach einem der Ansprüche 1 bis 9 oder 10 und 11 enthält.

**Claims**

1. Process for preparing a silylated silica having a homogeneous coat of silylating agent or having a homogeneously distributed fraction of polar groups in the silylating agent coat, in which the preparation process takes place in 3 separate successive steps each in a separate vessel: (1) loading of the hydrophilic parent silica with silylating agent, (2) reaction of the hydrophilic silica with the silylating agent, and (3) purification of the hydrophilic silica to remove silylating agent and reaction side products.

2. Process for preparing the silylated silica according to claim 1, **characterized in that** during the preparation of the hydrophilic parent silica no more than 10% by weight of water is added, based on the total weight of the parent silica.

3. Process for preparing silylated silica according to claim 1 or 2, **characterized in that** the transport of the silica from step (1) to step (2) and step (3) takes place by means of gravity.

4. Process for preparing the silylated silica according to one or more of claims 1 to 3, **characterized in that** the reaction by-products and purification off-products of the silylating reaction are cycled from step (3) back into the coating step (1).

5. Process for preparing the silylated silica according to one or more of claims 1 to 4, **characterized in that** the silylating agent or agents is or are supplied to the silica in liquid form as a very finely divided aerosol.

6. Process for preparing the silylated silica according to one or more of claims 1 to 5, **characterized in that** during or after the silylating step methods of mechanical compaction are employed.

7. Process for preparing the silylated silica according to one or more of claims 1 to 6, **characterized in that** after the silylating step methods of deagglomeration of the silica are employed.

8. Process for preparing a silica according to one or more of claims 1 to 7, **characterized in that** the silica is silylated with a

    I) silylating agent containing apolar groups

        I a) organosilane of the formula

$$R^1{}_n SiX_{4-n}$$

        where n = 1, 2 or 3
        or mixtures of these organosilanes,
        $R^1$ being a monounsaturated or polyunsaturated, monovalent, optionally halogenated, hydrocarbon radical having from 1 to 18 carbon atoms, each $R^1$ being identical or different, and
        X = halogen, nitrogen radical, $OR^2$, $OCOR^2$, $O(CH_2)_x OR^2$, $R^2$ being hydrogen or a monovalent hydrocarbon radical having from 1 to 12 carbon atoms
        and x = 1, 2 or 3,
        and/or
        I b) organosiloxane composed of units of the formula

$$(R^1{}_3 SiO_{1/2})$$

        and/or

$$(R^1{}_2 SiO_{2/2})$$

        and/or

$$(R^1 SiO_{3/2}),$$

        $R^1$ being as defined above, and
        the number of these units in one organosiloxane being at least 2,
        and Ia and Ib can be used alone or in any desired mixtures.

9. Process for preparing a silica according to claim 8, **characterized in that** at least two different silylating agents are employed, with the proviso that at least one silylating agent has a viscosity of less than 2 mPas at 25°C and at least one silylating agent has a viscosity of more than 5 mPas at 25°C.

10. Process for preparing a silica according to one or more of claims 1 to 7, **characterized in that** the silica is silylated with a

    I) silylating agent containing apolar groups

        I a) organosilane of the formula

$$R^1{}_n SiX_{4-n}$$

        where n = 1, 2 or 3
        or mixtures of these organosilanes,
        $R^1$ being a monounsaturated or polyunsaturated, monovalent, optionally halogenated, hydrocarbon radical having from 1 to 18 carbon atoms, each $R^1$ being identical or different, and
        X = halogen, nitrogen radical, $OR^2$, $OCOR^2$, $O(CH_2)_x OR^2$, $R^2$ being hydrogen or a monovalent hydrocarbon radical having from 1 to 12 carbon atoms
        and x = 1, 2 or 3,
        and/or
        I b) organosiloxane composed of units of the formula

$$(R^1_3SiO_{1/2})$$

and/or

$$(R^1_2SiO_{2/2})$$

and/or

$$(R^1SiO_{3/2}).$$

R$^1$ being as defined above, and
the number of these units in one organosiloxane being at least 2,
and Ia and Ib can be used alone or in any desired mixtures
and/or with

II) silylating agent containing polar groups

II a) organosilanes of the formula

$$R^3_mR^1_nSiX_1$$

where m + n + 1 = 4,
n = 0, 1 or 2,
and m = 1, 2 or 3
where R$^3$ denotes a hydrogen or a monovalent or divalent hydrocarbon radical which has from 1 to 12 carbon atoms and contains one or more identical or different heteroatoms Y, and, if it is a divalent hydrocarbon radical, may be attached to 2 silicon atoms, or may be attached in an organosilane of structure $X_{4-n-m}R^1_nSiR^3_mSiR^1_nX_{4-n-m}$,
the heteroatom Y being an element from main groups 3, 4 (not C), 5, and 6 of the periodic table of the elements,
Y preferably being N, P, O, and S,
and/or an
II b) organosiloxane composed of one or more identical or different units of the formula

$$R^3_qR^1_rSiO_{(4-q-r)/2},$$

where
q = 1, 2 or 3,
r = 0, 1 or 2,
and q + r is < 4,
R$^1$ and R$^3$ being as defined above, the number of these units in one organosiloxane being at least 2, and IIa and IIb can be used alone or in any desired mixtures with Ia and Ib, with the proviso that silylating agent (II) containing polar groups makes up at least 1-80% by weight of the total amount of silylating agents (I) and (II).

11. Process for preparing a silica according to claim 10, **characterized in that** a (I) silylating agent containing apolar groups makes up at least 20% by weight of the total amount of silylating agents.

12. Silica of low silanol group content preparable according to one or more of claims 1 to 9, having an average primary particle size of less than 100 nm, said primary particles not existing in isolation in the silica but instead being constituents of larger aggregates (as defined in DIN 53206) which have a diameter of from 100 to 1000 nm and make up agglomerates (as defined in DIN 53206) which depending on the external shearing load have sizes of from 1 to 500 μm, the silica having a specific surface area of from 10 to 300 m$^2$/g (measured by the BET method to DIN 66131 and 66132), the silica having a fractal mass dimension $D_m$ of less than or equal to 2.8, and a surface silanol group (SiOH) density of less than 0.6 SiOH/nm$^2$, and per 100 m$^2$/g specific surface area (measured by the BET method to DIN 66131 and 66132) a carbon content of at least 1.0% by weight.

**13.** Silica according to claim 12, **characterized in that** it has a homogeneously distributed fraction of polar groups in the silylating agent coat on the silica surface having an average primary particle size of less than 100 nm.

**14.** Toner, developer, charge control agent and/or flow aid for pulverulent systems, **characterized in that** it comprises a silica according to claim 12 or 13 or preparable according to any of claims 1 to 9 or 10 and 11.

**15.** Crosslinkable polymer composition and/or resin composition, **characterized in that** it comprises a silica according to claim 12 or 13 or preparable according to any of claims 1 to 9 or 10 and 11.

**Revendications**

**1.** Procédé de fabrication de silice silylée avec une couche d'agent de silylation homogène ou avec une proportion répartie de manière homogène de groupes polaires dans la couche d'agent de silylation, le procédé de fabrication ayant lieu en 3 étapes séparées successives, qui ont chacune lieu dans un récipient propre : (1) chargement de la silice hydrophile de départ avec l'agent de silylation, (2) réaction de la silice hydrophile avec l'agent de silylation et (3) purification de la silice hydrophile de l'agent de silylation et des produits de réaction secondaires.

**2.** Procédé de fabrication de la silice silylée selon la revendication 1, **caractérisé en ce que** lors de la fabrication de la silice hydrophile de départ, une quantité inférieure ou égale à 10 % en poids d'eau par rapport au poids total de la silice de départ est ajoutée.

**3.** Procédé de fabrication de la silice silylée selon la revendication 1 ou 2, **caractérisé en ce que** le transport de la silice de l'étape (1) vers l'étape (2) et l'étape (3) a lieu par la gravité.

**4.** Procédé de fabrication de la silice silylée selon une ou plusieurs des revendications 1 à 3, **caractérisé en ce que** les produits de réaction secondaires et les produits éliminés lors de la purification de la réaction de silylation de l'étape (3) sont reconduits dans l'étape (1) de remplissage.

**5.** Procédé de fabrication de la silice silylée selon une ou plusieurs des revendications 1 à 4, **caractérisé en ce que** le ou les agents de silylation de la silice sont ajoutés sous forme liquide en tant qu'aérosol finement divisé.

**6.** Procédé de fabrication de la silice silylée selon une ou plusieurs des revendications 1 à 5, **caractérisé en ce que** des procédés de compactage mécanique sont utilisés pendant ou après l'étape de silylation.

**7.** Procédé de fabrication de la silice silylée selon une ou plusieurs des revendications 1 à 6, **caractérisé en ce que** des procédés de désagglomération de la silice sont utilisés après l'étape de silylation.

**8.** Procédé de fabrication d'une silice selon une ou plusieurs des revendications 1 à 7, **caractérisé en ce que** la silice est silylée avec

I) un agent de silylation comprenant des groupes apolaires

Ia) un organosilane de formule

$$R^1_n SiX_{4-n}$$

dans laquelle n = 1, 2 ou 3
ou des mélanges de ces organosilanes,
$R^1$ représentant un radical hydrocarboné une ou plusieurs fois insaturé, monovalent, éventuellement halogéné, comportant 1 à 18 atomes C, et pouvant être identique ou différent et
X = halogène, radical azote, $OR^2$, $OCOR^2$, $O(CH_2)_x OR^2$,
$R^2$ représentant l'hydrogène ou un radical hydrocarboné monovalent qui comporte 1 à 12 atomes C
et x = 1, 2 ou 3
et/ou
Ib) un organosiloxane construit à partir d'unités de formule

$$(R^1_3 SiO_{1/2})$$

et/ou

$$(R^1_2SiO_{2/2})$$

et/ou

$$(R^1SiO_{3/2}),$$

dans lesquelles $R^1$ a la signification ci-dessus,
le nombre de ces unités dans un organosiloxane étant d'au moins 2,
et Ia et Ib pouvant être utilisés seuls ou en mélanges quelconques.

9. Procédé de fabrication d'une silice selon la revendication 8, **caractérisé en ce qu'**au moins deux agents de silylation différents sont utilisés, à condition qu'au moins un agent de silylation présente une viscosité inférieure à 2 mPas à 25°C et qu'au moins un agent de silylation présente une viscosité supérieure à 5 mPas à 25°C.

10. Procédé de fabrication d'une silice selon une ou plusieurs des revendications 1 à 7, **caractérisé en ce que** la silice est silylée avec

I) un agent de silylation comprenant des groupes apolaires

Ia) un organosilane de formule

$$R^1_nSiX_{4-n}$$

dans laquelle n = 1, 2 ou 3
ou des mélanges de ces organosilanes,
$R^1$ représentant un radical hydrocarboné une ou plusieurs fois insaturé, monovalent, éventuellement halogéné, comportant 1 à 18 atomes C, et pouvant être identique
ou différent et
X = halogène, radical azote, $OR^2$, $OCOR^2$, $O(CH_2)_xOR^2$,
$R^2$ représentant l'hydrogène ou un radical hydrocarboné monovalent qui comporte 1 à 12 atomes C
et x = 1, 2 ou 3
et/ou
Ib) un organosiloxane construit à partir d'unités de formule

$$(R^1_3SiO_{1/2})$$

et/ou

$$(R^1_2SiO_{2/2})$$

et/ou

$$(R^1SiO_{3/3}),$$

dans lesquelles $R^1$ a la signification ci-dessus,
le nombre de ces unités dans un organosiloxane étant d'au moins 2,
et Ia et Ib pouvant être utilisés seuls ou en mélanges quelconques
et/ou avec

II) un agent de silylation comportant des groupes polaires

IIa) un organosilane de formule

$$R^3_mR^1_nSiX_1$$

dans laquelle m + n + 1 = 4

n = 0, 1 ou 2

et m = 1, 2 ou 3,

$R^3$ représentant un hydrogène ou un radical hydrocarboné monovalent ou bivalent, contenant un ou plusieurs hétéroatomes Y identiques ou différents, comportant 1 à 12 atomes C, dans le cas où il s'agit d'un radical hydrocarboné bivalent, celui-ci pouvant être relié à 2 atomes Si ou être relié dans un organosilane de structure $X_{4-n-m}R^1_nSiR^3_mSiR^1_nX_{4-n-m}$,

l'hétéroatome Y étant un élément des groupes principaux 3, 4 (pas C), 5 et 6 du tableau périodique des éléments,

Y étant de préférence N, P, O et S,

et/ou

IIb) un organosiloxane construit à partir d'une ou de plusieurs unités identiques ou différentes de formule

$$R^3_qR^1_rSiO_{(4-q-r)/2}$$

dans laquelle

q = 1, 2 ou 3

r = 0, 1 ou 2

et q + r < 4,

$R^1$ et $R^3$ ayant la signification ci-dessus, le nombre de ces unités dans un organosiloxane étant d'au moins 2, et IIa et IIb pouvant être utilisés seuls ou en mélanges quelconques avec Ia et Ib, à condition que l'agent de silylation (II) comportant des groupes polaires représente au moins 1 à 80 % en poids de la quantité totale d'agents de silylation (I) et (II).

**11.** Procédé de fabrication d'une silice selon la revendication 10, **caractérisé en ce qu'**un agent de silylation (I) comportant des groupes apolaires représente au moins 20 % en poids de la quantité totale d'agents de silylation.

**12.** Silice ayant une faible teneur en groupes silanol, pouvant être fabriquée selon une ou plusieurs des revendications 1 à 9, d'une taille moyenne de particule primaire inférieure à 100 nm, ces particules primaires n'existant pas sous forme isolée dans la silice, mais étant plutôt des constituants d'agrégats de plus grande taille (définition selon DIN 53206), qui présentent un diamètre de 100 à 1 000 nm, et d'agglomérats (définition selon DIN 53206) qui, en fonction des contraintes de cisaillement externes, présentent des tailles de 1 à 500 $\mu$m, la silice présentant une surface spécifique de 10 à 300 m²/g (mesurée par la méthode BET selon DIN 66131 et 66132), la silice présentant une dimension fractale de la masse $D_m$ inférieure ou égale à 2,8 et une densité en groupes silanol SiOH de surface inférieure à 0,6 SiOH/nm² et pour, 100 m²/g de surface spécifique (mesurée par la méthode BET selon DIN 66131 et 66132), une teneur en carbone d'au moins 1,0 % en poids.

**13.** Silice selon la revendication 12, **caractérisée en ce qu'**elle présente une proportion répartie de manière homogène de groupes polaires dans la couche d'agent de silylation de la surface de la silice avec une taille moyenne de particule primaire inférieure à 100 nm.

**14.** Toner, révélateur, adjuvant d'orientation de la charge et/ou adjuvant d'écoulement pour systèmes pulvérulents, **caractérisé en ce qu'**il contient une silice selon la revendication 12 ou 13 ou pouvant être fabriquée selon l'une quelconque des revendications 1 à 9 ou 10 et 11.

**15.** Matière polymère et/ou résineuse réticulable, **caractérisée en ce qu'**elle contient une silice selon la revendication 12 ou 13 ou pouvant être fabriquée selon l'une quelconque des revendications 1 à 9 ou 10 et 11.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0855368 A1
- EP 0926210 A1
- EP 579049 A

- DE 02211377
- DE 2344388

**In der Beschreibung aufgeführte Nicht-Patentliteratur**

- **G.W. Sears.** *Anal. Chem.,* 1956, vol. 28 (12), 1981